(19) Europäisches Patentamt
European Patent Office
Office européen des brevets

(11) EP 2 648 108 A1

(12) EUROPEAN PATENT APPLICATION
published in accordance with Art. 153(4) EPC

(43) Date of publication:
09.10.2013 Bulletin 2013/41

(21) Application number: 10860341.6

(22) Date of filing: 30.11.2010

(51) Int Cl.:
*G06F 13/00* (2006.01)

(86) International application number:
PCT/JP2010/071381

(87) International publication number:
WO 2012/073333 (07.06.2012 Gazette 2012/23)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(71) Applicant: Fujitsu Limited
Kawasaki-shi, Kanagawa 211-8588 (JP)

(72) Inventor: ISHIKAWA, Tomonori
Kawasaki-shi
Kanagawa 211-8588 (JP)

(74) Representative: Schultes, Stephan
Haseltine Lake LLP
300 High Holborn
London WC1V 7JH (GB)

# (54) ANALYSIS SUPPORT DEVICE, ANALYSIS SUPPORT METHOD, AND ANALYSIS SUPPORT PROGRAM

(57) An analysis support apparatus is disclosed. A storage part stores component information of components forming an information system, the component information including a component type and a relationship to other components, for each component. An extraction part extracts information of first traced components specified by tracing the relationship from a first component. An integration part integrates information of the first traced components to inter-type relationships between groups of the components having same component type, based on a correspondence of a component type of a related source and a component type of a related destination. A first layer applying part applies a first layer to a specific component type of second traced components traced by a first component type which the first component belongs to, by tracing the inter-type relationship from the first type and by acquiring the first layer of the inter-type relationship traced from the first component type.

FIG.4

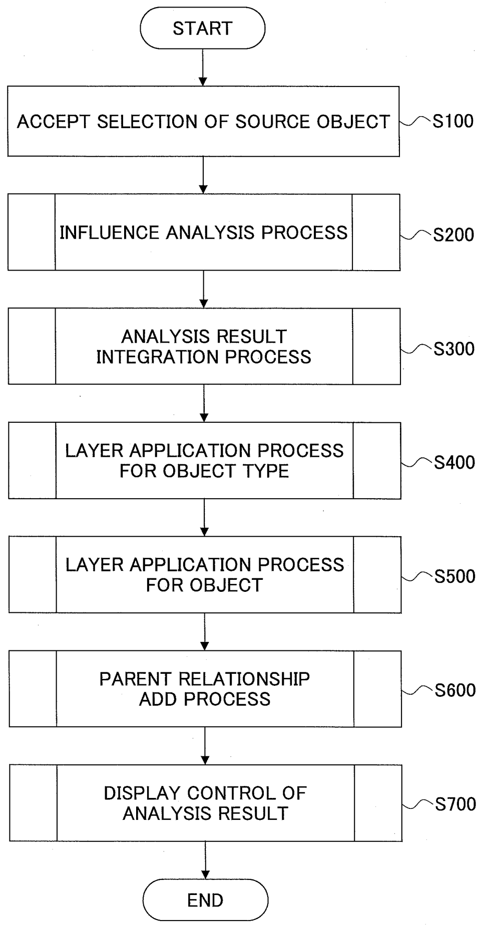


EP 2 648 108 A1

## Description

TECHNICAL FIELD

The present invention is related to an analysis support apparatus, an analysis support method, and an analysis support program.

BACKGROUND ART

Conventionally, by using a service repository, information pertinent to component elements of an information system has been centrally managed. The component elements of an information system may be service, an application, an interface, hardware, and the like. By using the service repository, it is possible to analyze influence of a change of a part of the component elements at high accuracy.

In response to increase of an information amount registered in the service repository, a multifaceted analysis becomes possible. On the other hand, disadvantageously, the information amount of an influence analysis result is significantly increased. Especially, each of the component elements of the information system is registered as a unit called an "object" in the service repository. A relationship between the component elements is registered as a relationship between objects. Hence, if a registration number of the objects is increased, a number of objects is significantly increased. As a result, the number of objects included in an influence range in an influence analysis increases.

In general, the information system is enhanced over time. Accordingly, the information amount of the service repository is increased over time. This fact causes increase of the information amount of the analysis result using the service repository. As a result, a display content of the analysis result becomes complicated. Even if a highly accurate analysis result is acquired, the display content becomes too complicated for a user to properly comprehend influence and the like caused by a change of a system.

Thus, in order to reduce complexity of the display content of the analysis result using the service repository, a function for simplifying the display content has been conventionally provided. For example, a function for restricting types of the objects to be a display subject, a function for restricting types of relationships (a parent- child relationship and the like), and the like have been proposed.

RELATED-ART DOCUMENT

PATENT DOCUMENT

Patent Document 1: Japanese Laid-Open Patent Publication No. 2000-322167

OVERVIEW OF THE INVENTION

PROBLEMS TO BE SOLVED BY THE INVENTION

However, in order to effectively restrict the display subject, the user needs to comprehend a content of the service repository beforehand. For example, the user may need to comprehend which types of the objects are registered, which relationship is formed between the objects, and the like. However, contents of the service repository change over time. Hence, it is difficult for the user to precisely comprehend the contents of the service repository.

Also, as disclosed in the Patent Document 1, even if format information is defined beforehand to restrict the display subject, an object of a new type which is not in conformity to the format information may be registered, or a new relationship may be registered. In this case, it is difficult to properly restrict the display subject by using the format information.

Furthermore, a hierarchy related from an object to another object is not always unique. For example, in an information system regarded as a management subject in the service repository, a hierarchy "system- > application- > interface" is defined for a part of the information system. On the other hand, for another part of the information system, a hierarchy "system- > service- > application- > interface" is defined. In this case, if it is attempted to restrict the display subject for each layer, since a layer to which the object belongs is inconsistent, a proper display content is not acquired. For example, in this case, there is a problem in that a shortage of applications to display may be caused, if a second layer is set as the display subject. In portions where a hierarchy "system- > service- > application- > interface" is defined, the "service" corresponds to the second layer.

In one aspect, the objective of the present invention is to provide an analysis support apparatus, an analysis support method, and an analysis support program which are able to reduce a workload for restricting the display subject of the component elements of the information system.

## MEANS TO SOLVE THE PROBLEMS

According to one aspect of an embodiment, an analysis support apparatus is provided, including a storage part configured to store component information pertinent to a plurality of components that forms an information system, the component information including a component type and a relationship to other components, for each of the plurality of components; an extraction part configured to extract information of first traced components, the first traced components being specified by tracing the relationship from a first component, for the plurality of components; an integration part configured to integrate information of the first traced components to inter-type relationships, the inter-type relationships being relationships between groups of the plurality of the components with having same component type, based on a correspondence of a component type of a related source and a component type of a related destination, the related source being a current component and the related destination being a component related to the current component; and a first layer applying part configured to apply a first layer to a specific component type of second traced components traced by a first component type which the first component belongs to, by tracing the inter-type relationship from the first type and by acquiring the first layer of the inter-type relationship traced from the first component type for each of the component types of the plurality of components.

## EFFECTS OF THE INVENTION

According to one aspect, it is possible to reduce workload for restricting a display subject of component elements of an information system.

## BRIEF DESCRIPTION OF DRAWINGS

FIG. 1 is a diagram illustrating a configuration example of an influence analysis support system in an embodiment of the present invention.
FIG. 2 is a diagram illustrating a hardware configuration example of the influence analysis support apparatus in the embodiment of the present invention.
FIG. 3 is a diagram illustrating a functional configuration example of the influence analysis support apparatus in the embodiment of the present invention.
FIG. 4 is a flowchart for explaining an example of a process procedure which the influence analysis support apparatus executes.
FIG. 5 is a diagram illustrating a display example of an influence analysis subject selection screen.
FIG. 6 is a diagram illustrating an example of system information registered in a system information storage part.
FIG. 7 is a diagram illustrating an example of analysis result information.
FIG. 8 is a diagram conceptually illustrating the example of the analysis result information.
FIG. 9 is a diagram illustrating an example of analysis result integration information.
FIG. 10 is a diagram illustrating an example of object type layer information.
FIG. 11 is a diagram illustrating an example of analysis result display information.
FIG. 12 is a flowchart for explaining an example of a process procedure of an influence analysis process.
FIG. 13 is a flowchart for explaining an example of a process procedure of an integration process of an influence analysis result.
FIG. 14 is a diagram for explaining a parent-child relationship between object types which analysis result integration information of an embodiment indicates.
FIG. 15 is a diagram for explaining an example of a process procedure of a process for applying a layer to an object type.
FIG. 16 is a diagram illustrating an example of a classifying table.
FIG. 17 is a flowchart for explaining an example of a process procedure of a generation process of the classifying table.
FIG. 18 is a flowchart for explaining an example of a process procedure of a registration process of a total number for each of layers of the object type of a related destination of a source object type.
FIG. 19 is a flowchart for explaining an example of the process procedure of the registration process of the total number for each of the layers of the object type of a related source of a source object type.
FIG. 20 is a flowchart for explaining an example of a process procedure of a determination process of the layer of the object type.

FIG. 21 is a flowchart for explaining an example of a process procedure of a process for applying the layer to the object.

FIG. 22 is a flowchart for explaining an example of a process procedure of a process for adding the relationship of a parent.

FIG. 23 is a flowchart for explaining an example of a process procedure of a process for adding the relationships of descendants as the relationships of the parent.

FIG. 24 is a flowchart for explaining an example of a process procedure of a display control process of an analysis result.

FIG. 25 is a diagram illustrating a display example of a relational diagram based on an influence analysis result of the embodiment.

## MODES FOR CARRYING OUT THE INVENTION

Embodiments are described with reference to drawings. FIG. 1 is a diagram illustrating a configuration example of an influence analysis support system in an embodiment of the present invention. In an influence analysis support system 1 illustrated in FIG. 1, an influence analysis support apparatus 10 and one or more user terminals 20 are connected and capable of communication through a network 30 (regardless of a wired or wireless communication) of a Local Area Network (LAN), the Internet, or the like.

The influence analysis support apparatus 10 is an example of an analysis support apparatus in the embodiment. For example, the influence analysis support apparatus 10 corresponds to a computer which centrally manages configuration information (hereinafter, called "system information") of an information system, which is not depicted, in an enterprise which introduces the influence analysis support system 1. Also, the influence analysis support apparatus 10 conducts an analysis and the like of an influence region due to a change of a part of the information system or the like.

The user terminal 20 is a computer such as a Personal Computer (PC) which is positioned as a user interface of the influence analysis support system 1. That is, the user terminal 20 accepts an instruction input from a user, and sends a process request in response to the instruction input to the influence analysis support apparatus 10. A process result or the like returned in response to the process request is displayed at the user terminal 20. A portable information processing apparatus such as a mobile phone, a smartphone, a Personal Digital Assistant (PDA), or the like may be used as the user terminal 20.

FIG. 2 is a diagram illustrating a hardware configuration example of the influence analysis support apparatus in the embodiment of the present invention. The influence analysis support apparatus 10 in FIG. 2 includes a drive device 100, an auxiliary storage device 102, a memory device 103, a CPU 104, and an interface device 105 which are mutually connected via a bus B.

A program realizing a process in the influence analysis support apparatus 10 is provided by a recording medium 101. When the recording medium 101 storing the program is set in the drive device 100, the program is installed into the auxiliary storage device 102 through the drive device 100 from the recording medium 101. Installation of the program is not always needed to be conducted from the recording medium 101. The installation may be conducted by downloading the program from another computer through the network. The auxiliary storage device 102 stores the installed program, and stores files, data, and the like.

The program is read from the auxiliary storage device 102 and stored in the memory device 103, when an instruction is made to execute the program. The CPU 104 conducts a function pertinent to the influence analysis support apparatus 10 in accordance with the program stored in the memory device 103. The interface device 105 is used as an interface to connect to the network.

As an example of the recording medium 101, a portable recording medium such as a CD-ROM, a DVD disk, a USB memory, or the like may be used. Also, as one example of the auxiliary storage device 102, a Hard Disk Drive (HDD), a flash memory, or the like may be used. Any of the recording medium 101 and the auxiliary storage device 102 correspond to computer-readable recording media.

Also, the user terminal 20 may include the hardware depicted in FIG. 2. The user terminal 20 includes an input device which accepts an input from the user, a display device which displays information, and the like. Also, the influence analysis support apparatus 10 may be operable by the user without using the user terminal 20. In this case, the influence analysis support apparatus 10 may include an input device and a display device.

FIG. 3 is a diagram illustrating a functional configuration example of the influence analysis support apparatus in the embodiment of the present invention. In FIG. 3, the influence analysis support apparatus 10 includes a system information storage part 11, an analysis request reception part 12, an influence analysis part 13, an analysis result integration part 14, a type layer applying part 15, an object layer applying part 16, a relationship addition part 17, a display control part 18, and the like. Each of these parts is realized by a process which the program, which is installed into the influence analysis support apparatus 10, causes the CPU 104 to execute.

For example, the system information storage part 11 stores the system information by using the auxiliary storage device 102. The system information in the embodiment includes data (hereinafter, called an "object") pertinent to the component elements of the information system, data pertinent to a relationship between the component elements (between the objects), and the like. As examples of types of the component elements of the information system, a system forming the information system, a service provided by a system, an application to conduct a process to provide the service, an interface which the service includes, and the like may be considered. Types of the objects (hereinafter, called "object types") are the same as the types of the component elements.

Multiple types (hereinafter, called "related types") are defined for relationship between the objects. For example, as examples of the related types, "Contains", "EquivalentTo", "HasChild", "HasParents", "Uses", "Replaces", "Supersedes", and the like are considered. The "Contains" indicates including. The "Contains" indicates that the component element of a related source being related by the relationship of "Contains" includes the component element of a related destination. The "EquivalentTo" indicates equivalent. The "EquivalentTo" indicates that the component element of the related source being related by the relationship of the "EquivalentTo" is the same as or equivalent to the component element of the related destination. The "HasChild" indicates including a child. The "HasChild" indicates that the component element of the related source being related by the relationship of the "HasChild" is a parent of the component element of the related source. The "HasParents" indicates including a parent. The "HasParents" indicates that the component element of the related source being related by the relationship of the "HasParents" is a child of the component element of the related destination. The "Uses" indicates using. The "Uses" indicates that the component element of the related source being related by the relationship of the "Uses" uses the component element of the related destination. The "Replaces" indicates replacing. The "Replaces" indicates that the component element of the related source being related by the relationship of the "Replaces" is replaced with the component element of the related destination. The "Supersedes" indicates superseding. The "Supersedes" indicates that the component element of the related source being related by the relationship of the "Supersedes" is superseded with the component element of the related destination. It may be appropriately defined what relationship type the relationship between the component elements in a specific information system is applied to.

The analysis request reception part 12 receives an execution request of the influence analysis. Specifically, the analysis request reception part 12 receives a selection of the object to set a subject of the influence analysis in the objects stored in the system information storage part 11.

The influence analysis part 13 analyzes, by using the system information storage part 11, an influence range in a case in which a change occurs in the component element pertinent to the object selected as the subject of the influence analysis. Specifically, the influence analysis part 13 traces the relationships between the objects, and extracts the relationships and the objects being traced from the system information storage part 11, with the object (component element) indicated by the user as a source (hereinafter, called a "source object"). In the embodiment, the influence analysis part 13 corresponds to an example of an extraction part. Tracing the relationship corresponds to searching for or specifying the object of the related destination in the relationship starting with the object of the related source in the relationship.

The analysis result integration part 14 integrates (or consolidates) the relationship between the objects extracted by the influence analysis part 13 to the relationship (an inter-type relationship) between objects based on a correspondence between the type of the component element of the related source and the type of the component element of the related destination. In the embodiment, the analysis result integration part 14 corresponds to an example of an integration part.

The type layer applying part 15 traces the relationships from the object type (hereinafter, called a "source object type") to which the source object belongs, and acquires a layer (a relative layer) of the relationship from the source object type for each of the object types. The type layer applying part 15 applies the layer acquired for each of the object types to a corresponding object type. The layer indicates a layer in a hierarchical structure (a parent-child relationship) formed by the relationship between the object types. In a case in which a first object type (or the object) is regarded as the source, the layer of a second object type (or the object) is measured by a distance (a number of the relationships) between the first object type and the second object type. In the embodiment, the type layer applying part 15 corresponds to an example of a first layer applying part.

The object layer applying part 16 applies the layer with respect to the objects extracted by the influence analysis part 13 based on the layer applied to the corresponding object types by the type layer applying part 15. That is, the layer, which is applied to each of the objects, corresponds to a layer applied to the object type to which the object belongs. In the embodiment, the object layer applying part 16 corresponds to an example of a second layer applying part.

The relationship addition part 17 generates the relationship between the objects in an upper layer based on the relationship between objects in a lower layer in the hierarchical structure (the parent-child relationship). For example, the relationship between children is regarded as the relationship between their parents. The generated relationship corresponds to information used for a display. Accordingly, this relationship is not registered in the system information storage part 11.

The display control part 18 executes a process for displaying a result (information indicating the influence range) of the influence analysis pertinent to a change of the component elements concerning the source object based on process results acquired by the influence analysis part 13, the type layer applying part 15, and the object layer applying part 16. For example, the display control part 18 restricts the objects to be set as the display subjects based on the layers applied to the object.

In the following, a process procedure of the influence analysis support apparatus 10 will be described. FIG. 4 is a flowchart for explaining an example of the process procedure which the influence analysis support apparatus executes.

In step S100, the analysis request reception part 12 receives an execution request of the influence analysis from the user. For example, the analysis request reception part 12 receives a selection of the object as a subject (source) the influence analysis.

FIG. 5 is a diagram illustrating a display example of the influence analysis subject selection screen. In FIG. 5, the influence analysis subject selection screen 510 includes an object type selection area 511, an object selection area 512, and the like.

The object type selection area 511 is an area which displays a list of the object types. The list of the object types may be registered beforehand in a definition file or the like. Also, the analysis request reception part 12 may extract the list of the object types by searching for the objects registered in the system information storage part 11.

The object selection area 512 is an area to select the object as the subject of the influence analysis from the list of the objects which belong to the object type selected in the object type selection area 511. That is, when the selection of the object type in the object type selection area 511 is detected, the analysis request reception part 12 searches for the objects belonging to the selected object type in the system information storage part 11. The analysis request reception part 12 displays a list of the searched objects in the object selection area 512. For example, when any one of the objects displayed in the object selection area 512 is selected by a right click, the analysis request reception part 12 displays a context menu 513. When "EXECUTE INFLUENCE ANALYSIS" is selected in the context menu 513, the analysis request reception part 12 requests the influence analysis part 13 to execute the influence analysis in which the object selected by the right click is set as the source object.

In response to a request from the analysis request reception part 12, the influence analysis part 13 executes the influence analysis process pertinent to the source object (S200). That is, the influence analysis part 13 recursively traces the relationship between the objects from the source object, and extracts traced relationships and objects from the system information storage part 11.

FIG. 6 is a diagram illustrating an example of the system information registered in the system information storage part. As illustrated in FIG. 6, the system information in the embodiment may be a set of XML (eXtensible Markup Language) files for each of the objects. That is, one XML file stores one object.

An element name (a tag name) of a root element for each of the XML files indicates the object type. For example, the element name of the root element of a XML file f1 is "System". Thus, it is seen that the object type of the object stored in the XML file f1 is "System". On the other hand, the element names of the root elements of XML files f2 and f3 are "Service". Thus, it is seen that the object types of the object stored in the XML files f2 and f3 are "System".

Each of the XML files includes elements (hereinafter, called "relationship elements") and the like indicating the relationships which a name element, an ID element, and the object as a child elements of the root element are include.

A value of the Name element indicates a name of the object. For example, the name of the object indicates the name of the component element to which the object corresponds. A value of the ID element indicates an identification (hereinafter, called "object ID") of the object. The relationship element indicates a relationship which the object includes as the related source. The element name of the relationship element indicates the relationship type. The relationship element includes the ID element for each of the relationships belonging to the relationship type. A value of the ID element indicates the object ID of the object of the related destination.

For example, a relationship element eR1 is included in the XML file f1. The element name of the relationship element eR1 is "Contains". Thus, it is seen that the relationship type of the relationship indicated by the relationship element eR1 is "Contains". The relationship element eR1 includes an ID elements eR11, eR12, and the like as child elements. As illustrated by an arrow a1 in FIG. 6, a value of the ID element eR11 indicates the object ID of the object stored in the XML file f2. Also, as indicated by an arrow a2 in FIG. 6, a value of the ID element eR12 indicates the object ID of the object stored in the XML file f3.

Accordingly, it is seen that there is the relationship being the relationship type "Contains" between the object stored in the XML file f1 and the XML file f2 or f3. Also, it is seen that the related source of the relationship indicates the object stored in the XML file f1, and the related destination indicates the object stored in the XML file f2 or f3.

As described above, the system information includes property information (the object type, the name, the ID, and the like) for each of the objects, property information (the relationship type, the related source, the related destination, and the like) of the relationship between the objects, and the like. In step S200, the influence analysis part 13 recursively searches for the relationships between the objects from the system information storage part 11 with the source object as a start point. The influence analysis part 13 records the searched objects and relationships as information (hereinafter, called "analysis result information") indicating the influence range in the memory device 103 or the auxiliary storage device 102.

FIG. 7 is a diagram illustrating an example of the analysis result information. In FIG. 7, analysis result information t1 is represented in a table format. The analysis result information t1 includes a related source object type, a related source object name, the relationship type, a related destination object type, a related destination object name, and the like for each of the extracted (searched) relationships.

The related source object type indicates the object type of the object of the related source. The related source object name indicates the object name of the object of the related source. The related destination object type indicates the object type of the object of the related destination. The related destination object name indicates the object name of the object of the related destination.

The analysis result information t1 in FIG. 7 illustrates an example in which the object type indicates "SYSTEM", and the object name "ThisSystem1" indicates the source object.

Contents indicated by the analysis result information t1 in FIG. 7 are equivalent to information illustrated in FIG. 8.

FIG. 8 is a diagram conceptually illustrating an example of the analysis result information. In FIG. 8, the contents in FIG. 7 are represented by a relational diagram. Accordingly, also in FIG. 8, an object ob1 having the object type "SYSTEM" and the object name "ThisSystem1" is the source object. In FIG. 8, for the sake of convenience, the object, in which the source object is the related destination, is not depicted. That is, a search is also recursively conducted in a direction of the related source of the source object. If the object and the relationship exist, the object and the relationship are also extracted.

Next, the analysis result integration part 14 executes an integration process of an analysis result by the influence analysis part 13 (S300) . Specifically, the relationships between the objects included in analysis result information t1 are integrated into the relationships between the object types. As a result, analysis result integration information as illustrated in FIG. 9 is recorded in the memory device 103 or the auxiliary storage device 102.

FIG. 9 is a diagram illustrating an example of the analysis result integration information. As illustrated in FIG. 9, the same relationship type in which the same object types of the related source are the same the object types of the related destination in the analysis result information t1 are integrated into one relationship, and a number (a total number) of the integrated relationships is recorded in the analysis result integration information t2.

That is, the analysis result integration information t2 includes the related source object type, the relationship type, a parent-child, the related destination object type, and the total number for each of the integrated relationships. The parent-child is an item indicating whether the relationship forms a parent-child relationship (the hierarchical structure). In the embodiment, the relationship, which belongs to the relationship type "Contains", "HasChild", or "HasParents", forms the parent-child relationship. Relationships, which belong to the relationship type other than those, do not form the parent-child relationship.

Next, in a case in which the layer of the object type to which the source object belongs is regarded as a reference, the type layer applying part 15 determines relative layers of other object types based on the analysis result integration information t2 (refer to FIG. 9) extracted by the analysis result integration part 14 (S400) . As a result, as illustrated in FIG. 10, object type layer information is recorded in the memory device 103 or the auxiliary storage device 102.

FIG. 10 is a diagram illustrating an example of the object type layer information. As illustrated in FIG. 10, the object type layer information t3 indicates a layer applied to the object type for each of the object types. As illustrated in FIG. 7 and FIG. 8, in the embodiment, the object type (hereinafter, called a "source object type") of the source object indicates "SYSTEM". Accordingly, the object type layer information t3 in FIG. 10 indicates the relative layers (layer numbers of the relative layers) of other object types from "SYSTEM". In the embodiment, the greater a value of the layer, the lower a layer is. In FIG. 10, the layer of the object type "SERVICE" indicates "1". The layer of the object type "APPLICATION" indicates "1". The layer of the object type "INTERFACE" indicates "2".

As described above, in the embodiment, the layer to which each of the object types belongs is not set beforehand, but is automatically applied based on a result of the influence analysis.

Next, the object layer applying part 16 applies (allocates) the layer with respect to each of the objects included in the analysis result information t1 (refer to FIG. 7) (S500) . The layer applied to each of the objects is regarded as a layer recorded in the object type layer information t3 (FIG. 10) with respect to the object type to which the object belongs. As a result, as illustrated in FIG. 11, analysis result display information is recorded in the memory device 103 or the auxiliary storage device 102.

FIG. 11 is a diagram illustrating an example of the analysis result display information. As illustrated in FIG. 11, analysis result display information t4 is formed by basically adding columns of the related source layer and the related destination layer with respect to the analysis result information t1 (refer to FIG. 7). The layer applied to the related source object is recorded in the related source layer. The layer applied to the related destination object is recorded in the related destination layer.

Next, the relationship addition part 17 regards the relationship between the objects (between descendents) of lower layers as the relationship between the objects (between parents) of higher layers, and adds information pertinent to the relationship between the parents in the analysis result display information t4 (S600) . Rows included in a portion A in FIG. 11 are to be added in step S600. That is, the rows included in the portion A are not included in FIG. 7. Since the relationships between the objects having the parent- child relationships are integrated into one object which is a root of the parent- child relationships, the relationship regarded as the relationship between the parents forms the relationship other than the parent- child relationship.

Next, the display control part displays the result of the influence analysis at the user terminal 20 by using the analysis result display information or the like (S700) .

Next, step S200 will be described in detail. FIG. 12 is a flowchart for explaining an example of a process procedure of the influence analysis process.

In step S201, the influence analysis part 13 determines whether a target object has been searched for. When step S201 is initially executed, the target object is the source object. A determination whether the target object has been searched for is performed by determining whether the target object is included in a searched list, which will be described later. In the process in FIG. 12, the searched list corresponds to a storage area to store the searched (traced) object in a process recursively tracing the relationships between the objects. For example, the searched list may be generated in the memory device 103. First, a content of the searched list is empty. Hence, the influence analysis part 13 advances to step S202.

In step S202, the influence analysis part 13 searches for the target object from the system information storage part 11 (S202). In the embodiment, the XML file of the target object is acquired. Next, the influence analysis part 13 adds the target object in the searched list (S203). Next, the influence analysis part 13 searches for all related destination objects of the target object from the system information storage part 11 (S204). Specifically, in the XML file of the target object, the XML file of the object related to the object ID included as a value of the ID element of the child element of the relationship element is searched for (refer to FIG. 6).

When the related destination object is not searched for (NO in S205), the process in FIG. 12 is terminated. As described later, the process in FIG. 12 is recursively called. Hence, in a case of a recursive process, an end of the process in FIG. 12 intends that a process control returns to a calling originator.

When the related destination object is searched for (YES in S205), the influence analysis part 13 adds information of the target object and each of the related destination objects in the analysis result information t1 (refer to FIG. 7) (S206). Accordingly, rows are added for the number of the related destination objects in the analysis result information t1. The object type and the object name of the target object are registered in items of the related source object type and the related source object name for each of the rows to add. The related types of the relationships between the target object and each of the related destination objects where the rows are allocated are recorded in the item of the relationship type. The object types and the object names of the related destination objects where the rows are allocated are registered in the items of the related destination object types and the related destination object names.

Next, the influence analysis part 13 recursively executes the process in FIG. 12 for each of the related destination objects (S207) . In the recursive process, each of the related destination objects is regarded as the target object.

Next, the influence analysis part 13 searches for all related source objects of the target object from the system information storage part 11 (S208) . Specifically, in the XML files, the XML file, which records the object ID of the target object as a value of the ID element of the child element of the relationship element, is searched for (refer to FIG. 6) .

When the related source object is not searched for (NO in S209), the process in FIG. 12 is terminated. When the related source object is searched for (YES in S209), the influence analysis part 13 adds information of the target object and each of the related source objects in the analysis result information t1 (refer to FIG. 7) (S206). Hence, the rows are added in the analysis result information t1 for the number of the related source object. The object types and the object names of the related source objects where the rows are allocated are registered to respective items of the related source object types and the related source object name of the rows to add. The relation types of the relationships between each of the related source objects where the rows are allocated and the target object are recorded in respective items of the relationship types. The object type and the object name of the target object are registered in items of the related destination object type and the related destination object name.

Next, the influence analysis part 13 recursively executes the process in FIG. 12 for each of the related source objects (S211) . In the recursive process, each of the related source objects is regarded as the target object.

In the above described process, the analysis result information t1 in FIG. 7 is generated.

Next, step S300 in FIG. 4 will be described in detail. FIG. 13 is a flowchart for explaining an example of a process procedure of the integration process of the influence analysis result.

In step S301, the analysis result integration part 14 acquires a first row of the analysis result information t1 (FIG. 7) as a process subject (hereinafter, called "subject row"). Next, the analysis integration part 14 determines whether a row corresponding to the related source object type, the relationship type, and the related destination object type of the subject row has been already registered in the analysis result integration information t2 (FIG. 9) (S302). When the corresponding row has not been registered (NO in S302), the analysis result integration part 14 determines whether the relation type of the subject row represents the parent-child relationship (S303). In the embodiment, if the relationship type represents Contains, HasChild, or HasParents, the parent-child relationship is represented. It is appropriately determined which relationship type represents the parent-child relationship.

Next, the analysis result integration part 14 adds a new row including the related source object type, the relationship type, and the related destination object type of the subject row in the analysis integration information f2 (S304) . A value of the "PARENT- CHILD" of the row to be added is determined based on step S303. When the parent-child relationship is formed, a value "Y" is registered. When the parent- child relationship is not formed, a value "N" is registered. Also, one is registered in the "TOTAL NUMBER" of that row.

On the other hand, the row corresponding to the related source object type, the related type, and the related destination object type of the subject row has been already registered in the analysis result integration information t2 (FIG. 9) (YES in S302), the analysis result integration part 14 adds one to a value of the "TOTAL NUMBER" of the corresponding row (S305).

After step S304 or S305, the analysis result integration part 14 determines whether there is a row which has not been processed in the analysis result information t1 (S306). When a not-process row remains (YES in S306), the analysis result integration part 14 acquires a next row of the subject row as the process subject (S307), and repeats from step S302.

When the process ends for all rows in the analysis result information t1 (NO in S307), the analysis result integration part 14 terminates the process in FIG. 13.

By the above described process, the analysis result integration information t2 (FIG. 9) is generated. The parent-child relationship between the object types, which are indicated by the analysis result integration information t2 in FIG. 9, are the same as those in FIG. 14.

FIG. 14 is a diagram for explaining the parent-child relationship between the object types indicated by the analysis result integration information in the embodiment. Arrows in FIG. 14 represent parent-child relationships. Since the parent-child relationships are represented, relationships in which the "PARENT-CHILD" indicates "N" in the analysis result integration information t2, are not depicted.

As illustrated in FIG. 14, the "SYSTEM" is a parent of the "SERVICE", the "APPLICATION", and the "INTERFACE". The "SERVICE" is a parent of the "INTERFACE". Moreover, the "APPLICATION" is a parent of the "INTERFACE". As described above, it is seen that there are cases where the layer of the object belonging to the "INTERFACE" locates at one layer lower than the "SYSTEM" and where the layer locates at two lower than the "SYSTEM".

Next, step S400 in FIG. 4 will be described in detail. FIG. 15 is a flowchart for explaining an example of the process procedure of a process for applying the layer to the object type.

In step S410, the type layer applying part 15 generates a classifying table, for example, in the memory device 103 based on the analysis result integration information t2 (FIG. 9). The classifying table is a working table used to determine the layer for each of the object types.

FIG. 16 is a diagram illustrating an example of the classifying table. In the classifying table depicted in FIG. 16, for each of the object types, with respect to the layer where the object types are searched for, the total number of the relationships between the object types, which are ultimately traced for that layer is recorded. The layer where the object type is searched for is a layer where each of the object types is searched for by tracing the parent-child relationship between the object types indicated in the analysis result integration information t2 (that is, depicted in FIG. 14). As seen from FIG. 16, in the embodiment, the layer of the object type "SYSTEM" to which the source object belongs is determined as zero. As seen from FIG. 14, there is one layer or two layers of the parent-child relationship from the "SYSTEM" to the "INTERFACE". Hence, for the "INTERFACE", the total number is recorded for each of a layer "1" and a layer "2".

In step S410, a structure of the classifying table is generated. Specifically, in step S410, a row number and a column number of the classifying table t5 are determined. Hence, at an end of step S410, values are not registered in the classifying table t5. Registration of the values in the classifying table t5 is conducted after step S420.

Next, the type layer applying part 15 registers the source object type in the classifying table t5 (S420) . In an example in FIG. 16, the "SYSTEM" is registered in the object type of a first row. In FIG. 16, "X" is recorded for a layer 0 related to the "SYSTEM". This indicates that the "SYSTEM" corresponds to the layer 0. Accordingly, if it is identifiable that the "SYSTEM" corresponds to the layer 0, another symbol may be recorded at the layer 0.

Next, the type layer applying part 15 searches for each of the object types by tracing the parent- child relationship from the source object type, which is registered in the analysis result integration information t2, in a direction of the related destination (a direction of a child) . The type layer applying part 15 registers the total number recorded in the analysis result integration information t2 pertinent to a last relationship which is traced and related to the layer where each of the object types is searched for (S430) . The column where the total number is registered is a column corresponding to the layer in which each of the object types is searched for.

Next, the type layer applying part 15 searches for each of the object types by tracing the parent- child relationship from the source object type, which is registered in the analysis result integration information t2, in a direction of the related destination (a direction of a parent) . The type layer applying part 15 registers the total number recorded in the analysis result integration information t2 pertinent to a last relationship which is traced and related to the layer where each of the object types is searched for (S450) . The column where the total number is registered is a column corresponding to the layer where each of the object types is searched for.

Next, the type layer applying part 15 determines the layer for each of the object types and applies the determined layer to each of the object types based on the classifying table t5 (S470) . As a result, the object type layer information t3 (FIG. 10) is generated.

Next, step S410 will be described in detail. FIG. 17 is a flowchart for explaining an example of a process procedure of a generation process of the classifying table.

In step S411, the type layer applying part 15 counts a number of the object types based on the analysis result integration information t2 (FIG. 9). In the embodiment, as illustrated in FIG. 14, the number of the object types is four.

Next, the type layer applying part 15 generates rows for the number of the object types in the classifying table t5 (S412) . Next, the type layer applying part 15 generates estimated maximum number of the columns in the classifying table t5 (S413) . The estimated maximum number of the columns is calculated by the following expression (1) .

$$(\text{object type number} - 1) \times 2 + 1 \quad \ldots\ldots\ldots\ldots \quad (1)$$

Even in a case in which all object types other than the source object type belong to different layers and exist in one direction of the related destination or the related source, the expression (1) is presented to calculate a column number capable of registering the total number for each of the object types for each of the layers.

Next, the type layer applying part 15 generates the columns for a calculated column number in the classifying table t5. In this case, zero is allocated to a central column. A relative column number from the central column is allocated with a positive value for each of columns positioned at a right side from a center. The relative column number from the central column is allocated with a negative value for each of columns positioned at a left side from the center. The values allocated to the columns indicate the layers (layer numbers of respective layers) corresponding to the columns. The object types of the related destination of the source object type belongs to a positive layer. The object types of the related source of the source object type belong to a negative layer.

Next, step S430 in FIG. 15 will be described in detail. FIG. 18 is a flowchart for explaining an example of a process procedure of a registration process of the total number for each of the layers of the object type of the related destination of the source object type.

In step S431, the type layer applying part 15 sets the source object type as the object type (hereinafter, called "subject type".) to be a remarkable subject. Next, the type layer applying part 15 substitutes zero to a variable Layer (S432). The variable Layer is a variable to determine the layer where the object type is searched for.

Next, the type layer applying part 15 searches for the row in which the related source object types corresponds to the subject type and the value of the "PARENT- CHILD" indicates "Y" in the analysis result integration information t2 (S433) . That is, the row pertinent to the parent- child relationship where the subject type has is searched for. For example, when the subject type is the "SYSTEM", first to third rows are searched for in the analysis result integration information t2 in FIG. 9.

Next, the type layer applying part 15 eliminates rows included in the registered list from the searched rows (S434) . The registered list is regarded as a storage area for storing the rows where the total number is registered with respect to the classifying table t5 in the rows included in the analysis result integration information t2. Accordingly, step S434 is a process to avoid a duplication registration based on the same row in the analysis result integration information t2. For example, the registered list is generated in the memory device 103. First, contents of the registered list are empty. Hereinafter, as a result of elimination in step S434, a residual row is called an "available row". First, the first to third rows are the available rows in the analysis result integration information t2 in FIG. 9.

When there are the available rows (YES in S435), the type layer applying part 15 adds one to the variable Layer (S436). Next, the type layer applying part 15 registers the total number, which is registered in each of the available rows, in the classifying table t5 (S437). A cell to be a registration destination of the total number is specified by the row corresponding to the related destination object type of the available row and the column having the layer number corresponding to a value indicating the variable Layer.

For example, based on the first row of the analysis result integration information t2 in FIG. 9, the total number "4" is registered at the column of the layer "1" of the row of the "SERVICE" of the classifying table t5. Also, based on the second row of the analysis result integration information t2, the total number "2" is registered at the column of the layer "1" of the row of the "APPLICATION" of the classifying table t5. Moreover, based on the third row of the analysis result integration information t2, the total number "1" is registered at the column of the layer "1" of the row of the "INTERFACE" of the classifying table t5. If a value has been already registered in the cell of a registration destination, the total number to be registered is added to an existing value.

Next, the type layer applying part 15 adds each of the available rows to the registered list (S438) . Next, the type layer applying part 15 determines the related destination object type for each of the available rows to the subject type (S439), and repeats a process from step S433. That is, for each of the subject types for each of the available rows, the process from step S433 is repeated. As a result, so- called recursively, the relationship is traced between the object types and the related destination object type is searched for.

On the other hand, if it is determined in step S435 that there is no available row (NO in S435), the type layer applying part 15 deducts one from the variable Layer (S440). A process from step S440 basically is conducted for a case in which the layer, in which the object type different from the source object type is the root, is formed. Specifically, in FIG. 14, in a case in which the "SERVICE" further has the parent different from the parent of "SYSTEM", the process is conducted to register the total number of the relationships pertinent to the parent. In this case, the value of the variable Layer is deducted to trace back to the related source.

Next, the type layer applying part 15 searches for the row in which the related destination object type corresponds to the subject type and the value of the "PARENT" indicates "Y" in the analysis result integration information t2 (S441) . Next, the type layer applying part 15 eliminates the rows included in the registered list from the searched rows (S442) . As a result of the elimination in step S442, the residual row is called the "available row".

If there is the available row (YES in S443), the type layer applying part 15 executes a process from step S436 for each of the available rows. If there is no available row (NO in S443), the type layer applying part 15 terminates the process in FIG. 18.

Since a detailed process procedure of step S450 in FIG. 15 is obvious from the process procedure in FIG. 18 (an opposite to the process in FIG. 18), a flowchart is depicted in FIG. 19 and the explanation thereof will be omitted.

Next, step S470 in FIG. 15 will be described in detail. FIG. 20 is a flowchart for explaining an example of a process procedure of a determination process of the layer of the object type.

In step S471, the type layer applying part 15 acquires the first row as a process subject in the classifying table t5 (FIG. 16). Hereinafter, the acquired row is called a "subject row". Also, the object type pertinent to the subject row is called a "subject type".

Next, the type layer applying part 15 determines whether the total number is registered in multiple columns in the subject row (S472) . That is, it is determined whether multiple layers are applied with respect to the object type pertaining to the subject row. For example, in FIG. 16, the total number is not registered in the multiple columns for the "SYSTEM", "SERVICE", and "APPLICATION". If the total number is not registered in the multiple columns (NO in S472), the type layer applying part 15 applies the layer pertinent to the column where the total number is registered, to the subject type (S473) . That is, the row including the subject type and the layer number of the applied layer is registered in the object type layer information t3 (FIG. 10) .

On the other hand, if the total number is registered in the multiple columns of the subject row (YES in S472), the type layer applying part 15 determines the layer to apply to the subject type based on a comparison of the total number registered for each of the multiple columns (each of the layers). First, the type layer applying part 15 determines whether there are multiple maximum total numbers in the total numbers (S474). That is, it is determined whether the column (the layer) pertinent to the maximum total number is uniquely determined.

If there is one maximum total number (NO in S474), the type layer applying part 15 applies the layer pertinent to the column where the maximum total number is registered, to the subject type (S473). That is, the row including the subject type and the layer number of the applied layer is registered in the object type layer information t3 (FIG. 10).

On the other hand, if there are the multiple maximum total numbers (YES in S474), the type layer applying part 15 applies the layer pertinent to the column closer the column of the layer "0" in the columns where the maximum total numbers are registered (S476). That is, the row including the subject type and the layer number of the applied layer is registered in the object type layer information t3 (FIG. 10). In a case in which filtering (restriction of the display subjects) is conducted depending on the layer to display, the object belonging to the layer near the source (the layer "0") is unlikely to be a non-display pertaining to the object corresponding to the step S476. Accordingly, the layer near the layer "0" is applied. As a result, improper display omission related to the object belonging to the object type corresponding to step S476 is unlikely to occur.

Next, the type layer applying part 15 determines whether a next row of the subject row exists in the classifying table t5 (S477) . When the next row exists (YES in S477), the type layer applying part 15 sets the next row as the subject row (S478), and repeats a process from step S472. When the next row does not exist (NO in S477), the type layer applying part 15 terminates the process in FIG. 20.

Next, step S500 in FIG. 4 will be described in detail. FIG. 21 is a flowchart for explaining an example of a process procedure of a process for applying the layer to the object.

In step S501, the object layer applying part 16 acquires a first row as the process subject (hereinafter, called the "subject row") of the analysis result information t1 (FIG. 7). Next, the object layer applying part 16 determines the layer of the related source object of the subject row based on the object type layer information t3 (FIG. 10) (S502). Specifically, in the object type layer information t3, the layer registered for the object type which the related source object type of the subject row indicates is determined as the layer of the related source object.

Next, the object layer applying part 16 determines the layer of the related destination object of the subject row based on the object type layer information t3 (S503) . Specifically, in the object type layer information t3, the layer registered for the object type which the related source object type of the subject row is determined as the layer of the related source object.

Next, the object layer applying part 16 determines whether the relationship type of the subject row is related to the parent- child relationship (S504) . This determination may be similar to a process in step S303 in FIG. 13. Next, the object layer applying part 16 adds one row to the analysis result display information t4 (FIG. 11) based on a determination result in steps S502 through S504 (S505) . For the related source object type, the related source object name, the relationship type, the related destination object type, and the related destination object name of the row to be added, values included in the subject row are transcribed as they are. In the related source layer of the row to be added, a determination result of step S502 is recorded. In the related destination layer of the row to be added, a determination result of step S503 is recorded. In the parent- child of the row to be added, a determination result of step S504 is recorded.

Next, the object layer applying part 16 determines whether the next row of the subject row exists in the analysis result information t1 (S506) . If there is the next row (YES in S506), the object layer applying part 16 sets the next row as the subject row (S507), and repeats a process from step S502. If there is no next row (NO in S506), the object layer applying part 16 terminates the process in FIG. 21.

By the above described process, the analysis result display information t4 is generated.

Next, step S600 in FIG. 4 will be described in detail. FIG. 22 is a flowchart for explaining an example of a process procedure of an addition process of the relationship of the parent.

In step S610, the relationship addition part 17 acquires a first row of the analysis result display information t4 (FIG. 11), and sets the first row as a process subject (hereinafter, called the "subject row"). Next, the relationship addition part 17 executes a process for adding the relationships, which descendants lower than or equal to a child (lower than or equal to the related destination object) of the parent (the related source object) of the subject row have, to the analysis result display information t4 (S620).

Next, the relationship addition part 17 determines whether the next row of the subject row exists in the analysis result display information t4 (S640) . If there is the next row (YES in S640), the relationship addition part 17 sets the next row as the subject row (S650), and repeats a process from step S620. If there is no next row (NO in S640), the relationship addition part 17 terminates the process in FIG. 21. The row added in step S620 is excluded from a determination subject of step S640.

Next, step S620 will be described in detail. FIG. 23 is a flowchart for explaining an example of a process procedure of a process for adding the relationships of the descendants as the relationships of the parent.

In step S621, the relationship addition part 17 determines whether the relationship of the subject row corresponds to the parent-child relationship (S621). The determination may refer to the value of the "PARENT-CHILD" of the subject row. The subject row where step S621 is first executed corresponds to the subject row in FIG. 22.

Next, the relationship addition part 17 searches for the row, in which the related destination object of the subject row is registered as the related source, from the analysis result display information t4 (FIG. 11) (S622) . If there is no searched row (NO in S623), the relationship addition part 17 returns the process control to the calling originator of the process in FIG. 23.

If there is the searched row (YES in S623), the relationship addition part 17 sets the searched row as the subject row, and recursively calls the process in FIG. 23 (S624). By recursively executing the process in FIG. 23, for each of the layers, the relationship of the descendants of the layer is generated as the relationship of the parent.

Next, the relationship addition part 17 adds a result, in which information of the related source is replaced with information of the related source of the subject row for each of the rows searched in step S632, to the analysis result display information t4 (S625) . The information of the related source indicates the related source object type, the related destination object type, and the related source layer. That is, based on the row where the child is the related source, the row where the parent is regarded as the related source is added.

Next, the relationship addition part 17 determines whether the related source layer is different from the related destination layer for each of the added rows (S626) . For the row were the related source layer is the same as the related destination layer (NO in S626), steps S627 and S628 are not executed. That is, the relationship between the parents is generated for the parents having the same layer.

For the row where the related source layer is the same as the related destination layer (YES in S626), steps S627 and S628 are executed. Accordingly, in explanations of steps S627 and S628, the "added row" corresponds to the row where the related source layer is different from the related destination layer, in the rows added in step S625.

In step S627, the relationship addition part 17 traces back the relationships of the related destination object of the row in a direction of the related source, until the related destination layer of the added row corresponds to the related source layer (S627). Next, the relationship addition part 17 replaces values of the related destination object type, the related destination object name, and the related destination layer of the row with information of the object at an end point (that is, the same layer as the related source layer) of the back trace (S628). That is, for the added rows, the layer of the related destination is made to correspond to the layer of the related source.

Following step S628 or a case of NO in step S626, the relationship addition part 17 determines whether the related source object and the related destination object are the same object for each of the added rows (S629). Specifically, for each of the added rows, it is determined whether the related source object type and the related source object name are the same as the related destination object type and the related destination object name.

The relationship addition part 17 deletes the row (S630), in which the related source object and the related destination object are the same object (YES in S629).

This is a reason why after the relationships are traced in a descendant direction with a certain object as the source, the trace is back to the object being an original source as a result from tracing back in a parent direction, and the row indicating the relationship between the same objects is added. For example, in FIG. 8, for the row in which an object ob121 is determined as the related source and an object ob131 is determined as the related destination, a case results from replacing the object ob121 with the object ob1. In this case, the process arrives at the object ob1 by tracing back in the parent direction from the object ob131.

For the row in which the object ob221 is determined as the related source and the object ob133 is determined as the related destination, if the result from replacing the related source with the object ob2 is added, an available relationship is added. That is, in this case, the relationships are traced in the parent direction from the object ob133, and the object ob133 is replaced with the object ob1. As a result, the relationship, in which the object ob2 is determined as the related source and the object ob1 is determined as the related destination, is added.

By the processes in FIG. 22 and FIG. 23, the rows of the portion A in FIG. 11 are newly added.

Next, step S700 in FIG. 4 will be described in detail. FIG. 24 is a flowchart for explaining an example of a process procedure of a display control process of an analysis result.

In step S701, the display control part 18 sets an initial value to the display layer. The display layer is regarded as a layer which is determined as the display subject in the result of the influence analysis. That is, in the embodiment, the objects to be the display subject are restricted depending on the layer. For example, the initial value may be stored in a setting file or the like, and may be determined in logic of the display control part 18. Alternatively, in step S100 in FIG. 4, the display layer may be indicated when the source object is selected. In the embodiment, it is assumed that the initial value of the display layer is "0".

Next, the display control part 18 searches for the row, in which both the related source layer and the related destination layer are lower than the display layer, from the analysis result display information t4 (FIG. 11) (S702) . A magnitude relation between the display layer and each of the related source layer and the related destination layer is determined by considering positive and negative values, instead of an absolute value. For example, a layer "- 1" is determined as a layer lower than the layer "0".

Next, the display control part 18 deletes the row which is added as the relationship between the parents and in which the related source layer and the related destination layer are different from the display layer, from the searched rows (S703) . The row added as the relationship between the parents corresponds to the row which is added by executing the processes in FIG. 22 and FIG. 23. In order to realize step S703, information for identifying the added row may be additionally provided in the analysis result display information t4.

Next, the display control part 18 generates the relational diagram of the objects by tracing the relationships included in the row (hereinafter, called an "extraction row") which is extracted by conducting steps S702 and S703 (S704) . In this case, for example, the relationship pertinent to the parent- child relationship is drawn so as to include a child object in a parent object (that is, so as to be nested) . Also, for example, the relationship other than the parent- child relationship is drawn by an arrow from the related source to the related destination.

Next, the display control part 18 sends a display instruction of the relational diagram to the user terminal 20 (S705) . In response to the display instruction, the user terminal 20 displays the relational diagram.

FIG. 25 is a diagram illustrating a display example of the relational diagram based on the influence analysis result in the embodiment. In FIG. 25, a relational diagram g1 is displayed when the display layer is "0". In the relational diagram g1, the object belongs to the layer "0", and the relationships between the objects are indicated by arrows. The relationship displayed in the relational diagram g1 is added as the relationship between the parents based on the relationships of the descendants (the objects of lower layers). Accordingly, if the relationship is not added, in the relational diagram of the display layer "0", the rectangles indicating three objects are independently displayed. On the other hand, according to the relational diagram g1, it is seen that there are three objects, that is, any relationships between the component elements (use relationships in FIG. 25). That the relationship between descendants exists corresponds to that the relationship between at least portions of the component elements exists. Accordingly, by displaying the relationship, it is possible to improve convenience and the like of the relational diagram g1.

Next, for example, in response to an input by the user, when a change request of the display layer is received from the user terminal 20 (YES in step S706), the display control part 18 determines the layer indicated in the change request as a new display layer, and conducts a process from step S702. For example, when it is requested to change the display layer to the layer "1", the relational diagram g2 in FIG. 25 is generated, and is displayed at the user terminal 20.

In the relational diagram g2, the objects of the layer "0" and the layer "1" are displayed. For the object of the layer "1", the rectangle indicating the object having the object of the layer "0" and the parent-child relationship is included in the rectangle indicating the object of the layer "0". By an inclusive relationship of the rectangles, The parent-child relationship is easily and visually comprehensible. Also, the relationship, which is displayed as the relationship between the objects of the layer "0" in the relational diagram g1, is displayed as the relationship between the objects of the layer "1" and the relationship between the objects of the layer "0" and the layer "1". That is, the relationship, which is displayed in the relational diagram g1, is not displayed. This is a reason why in the relationships, which are added as the relationship between the parents based on the relationship between the descendants, only relationships between the layers corresponding to the display layers are determined as the display subjects. That is, when the lower layers are not determined as the display subject and the upper layers (the same as those of the relationships) are determined as the display subjects. By this display rule, it is possible to avoid contents of the relational diagram from being complicated since arrows are duplicate and displayed based on the same relationships.

A display form depicted in FIG. 25 is an example. Accordingly, the relational diagram may be displayed in another display form.

As described above, according to the embodiment, the layer is automatically applied with respect to each of the component elements (the objects) of the information system. Based on the layer automatically applied, the component elements as the display subjects in the result of the influence analysis and the like are appropriately restricted. Thus, the user does not have to understand or comprehend contents of the system information storage part 11 (for example, the service repository). As a result, it is possible to reduce workload for restricting the display subjects of the component elements.

Also, in a case in which there are multiple paths of the relationships through the component elements including the component elements of the source, inconsistency of the layers occurs in the component elements. In the embodiment, the relationships among the component elements are integrated as the relationships among the objects types (the inter-type relationships) based on a correspondence of the object type of the related source and the object type of the related destination. By tracing the inter- type relationships, the layer is applied for each of the object types. One layer is applied based on a comparison of the total number of a last inter- type relationship which is traced for each of the layers for the object type to which the multiple layers are applied. As a result, in a state in which inconsistency of the layers for the component elements has occurred, it is possible to restrict the display subjects.

The embodiment of the present invention is described above in detail. It should be noted that the present invention is not limited to the embodiments specifically disclosed above, but other variations and modifications may be made without departing from the scope of the present invention.

Description of Reference Symbols

| | |
|---|---|
| 1 | influence analysis support system |
| 10 | influence analysis support apparatus |
| 11 | system information storage part |
| 12 | analysis request reception part |
| 13 | influence analysis part |
| 14 | analysis result integration part |
| 15 | type layer applying part |
| 16 | object layer applying part |
| 17 | relationship addition part |
| 18 | display control part |
| 20 | user terminal |
| 30 | network |
| 100 | drive device |
| 101 | recording medium |
| 102 | auxiliary storage device |
| 103 | memory device |
| 104 | CPU |
| 105 | interface device |
| B | bus |

## Claims

**1.** An analysis support apparatus, **characterized by**:

a storage part (11) configured to store component information pertinent to a plurality of components that forms an information system, the component information including a component type and a relationship to other components, for each of the plurality of components;
an extraction part (13) configured to extract information of first traced components, the first traced components being specified by tracing the relationship from a first component, for the plurality of components;
an integration part (14) configured to integrate information of the first traced components to inter-type relationships, the inter-type relationships being relationship between groups of the plurality of the components with having same component type, based on a correspondence of a component type of a related source and a component type of a related destination, the related source being a current component and the related destination being a component related to the current component; and
a first layer applying part (15) configured to apply a first layer to a specific component type of second traced components traced by a first component type which the first component belongs to, by tracing the inter-type relationship from the first type and by acquiring the first layer of the inter-type relationship traced from the first component type for each of the component types of the plurality of components.

**2.** The analysis support apparatus as claimed in claim 1, **characterized in that**
the integration part (14) acquires a number of sets of information of the first traced components being integrated for each of the inter-type relationships; and
the first layer applying part (15) determines the first layer to apply to the component type based on a comparison of the numbers of the inter-type relationships which are related to a layer being applied and are traced at last, for the component type to which multiple of layers are applied.

**3.** The analysis support apparatus as claimed in claim 1 or 2, **characterized by**:

a second layer applying part (16) configured to apply the first layer applied to the type of the component, to the component type, to the component belonging to the component type; and
a display control part (18) configured to restrict the plurality of components to be display subjects based on the layer applied to each of the plurality of components.

**4.** The analysis support apparatus as claimed in claim 3, **characterized by**:

a relationship addition part (17) configured to generate the relationship between upper components of an upper layer of lower components based on the relationship between the lower components of a lower layer,
wherein the display control part (18) displays the relationship generated by the relationship addition part (17) when the lower layer is not determined as the display subject and the upper layer is determined as the display subject.

**5.** The analysis support apparatus as claimed in any one of claims 1 through 4, **characterized in that**
the relationships include a relationship which forms a hierarchical structure of the plurality of the components and a relationship which does not form the hierarchical structure of the plurality of the components ; and
the integration part (14) traces, from the first type, the inter-type relationship in which information of the first traced components being traced in relation to forming the hierarchical structure is integrated.

**6.** An analysis support method performed in a computer, the method **characterized by**:

an extraction step (13) configured to extract information of first traced components, the first traced components being specified by tracing a relationship from a first component, for a plurality of components stored in a storage part (11) which stores component information pertinent to the plurality of components that forms an information system, the component information including a component type and a relationship to other components;
an integration step (14) configured to integrate information of the first traced components inter-type relationship s, the inter-type relationships being relationships between groups of the plurality of the components with having same component type, based on a correspondence of a component type of a related source and a component type of a related destination, the related source being a current component and the related destination being a component related to the current component; and
a first layer applying step (15) configured to apply a first layer to a specific component type of second traced components traced by a first component type which the first component belongs to, by tracing the inter-type relationship from the first type and by acquiring the first layer of the inter-type relationship traced from the first component type for each of the component types of the plurality of components.

**7.** The analysis support method as claimed in claim 6, **characterized in that** the integration step (14) acquires a number of sets of information of the first traced components being integrated for each of the inter-type relationships; and the first layer applying step (15) determines the first layer to apply to the component type based on a comparison of the numbers of the inter-type relationships which are related to a layer being applied and are traced at last, for the component type to which multiple of layers are applied.

**8.** The analysis support method as claimed in claim 6 or 7, **characterized by**:

a second layer applying step (16) configured to apply the first layer applied to the component type , to the component belonging to the component type; and
a display control step (18) configured to restrict the plurality of components to be display subjects based on the layer applied to each of the plurality of components.

**9.** The analysis support method as claimed in claim 8, further **characterized by**:

a relationship addition step (17) configured to generate the relationship between upper components of an upper layer of lower components based on the relationship between the lower components of a lower layer,
wherein the display control step (18) displays the relationship generated by the relationship addition part (17) when the lower layer is not determined as the display subject and the upper layer is determined as the display subject.

**10.** The analysis support method as claimed in any one of claims 6 through 9, **characterized in that** the relationships include a relationship which forms a hierarchical structure of the plurality of the components and a relationship which does not form the hierarchical structure of the plurality of the components ; and the integration step (14) traces, from the first type, the inter-type relationship in which information of the first traced components being traced in relation to forming the hierarchical structure is integrated.

**11.** An analysis support program for causing a computer to perform a process, the process **characterized by**:

an extraction step (13) configured to extract information of first traced components, the first traced components being specified by tracing a relationship from a first component, for a plurality of components stored in a storage part which stores component information pertinent to the plurality of components that forms an information system, the component information including a component type and a relationship to other components;
an integration step (14) configured to integrate information of the first traced components inter-type relationship s, the inter-type relationships being relationships between groups of the plurality of the components with having same component type, based on a correspondence of a component type of a related source and a component type of a related destination, the related source being a current component and the related destination being a component related to the current component; and
a first layer applying step (15) configured to apply a first layer to a specific component type of second traced components traced by a first component type which the first component belongs to, by tracing the inter-type relationship from the first type and by acquiring the first layer of the inter-type relationship traced from the first component type for each of the component types of the plurality of components.

**12.** The analysis support program as claimed in claim 11, **characterized in that** the integration step (14) acquires a number of sets of information of the first traced components being integrated for each of the inter-type relationships; and the first layer applying step (15) determines the first layer to apply to the component type based on a comparison of the numbers of the inter-type relationships which are related to a layer being applied and are traced at last, for the component type to which multiple of layers are applied.

**13.** The analysis support program as claimed in claim 11 or 12, further **characterized by**:

a second layer applying step (16) configured to apply the first layer applied to the component type, to the component belonging to the component type; and
a display control step (18) configured to restrict the plurality of components to be display subjects based on the layer applied to each of the plurality of components.

**14.** The analysis support program as claimed in claim 13, further **characterized by**:

a relationship addition step (17) configured to generate the relationship between upper components of an upper layer of lower components based on the relationship between the lower components of a lower layer, wherein the display control step (18) displays the relationship generated by the relationship addition part (17) when the lower layer is not determined as the display subject and the upper layer is determined as the display subject.

**15.** The analysis support program as claimed in any one of claims 11 through 14, **characterized in that** the relationships include a relationship which forms a hierarchical structure of the plurality of the components and a relationship which does not form the hierarchical structure of the plurality of the components ; and the integration step (14) traces, from the first type, the inter-type relationship in which information of the first traced components being traced in relation to forming the hierarchical structure is integrated.

FIG.1

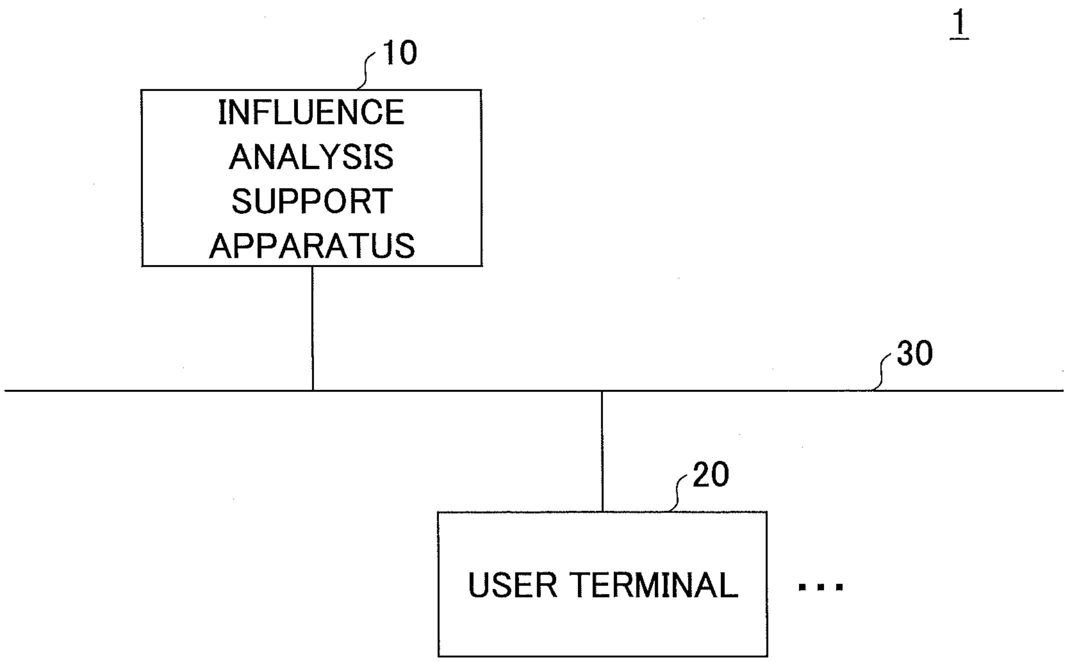
1
10
INFLUENCE ANALYSIS SUPPORT APPARATUS
30
20
USER TERMINAL
...

FIG.2

10

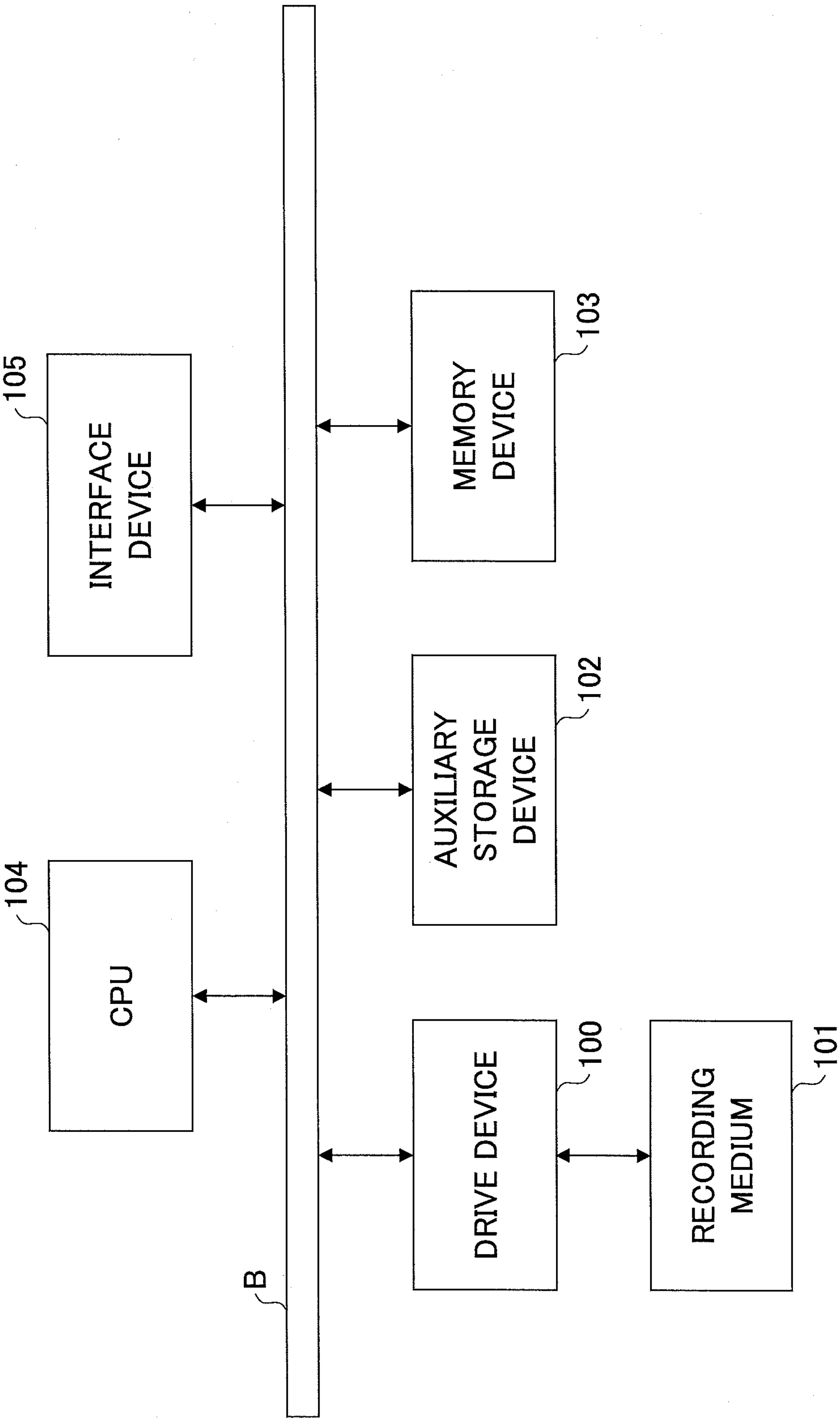
INTERFACE DEVICE
105
CPU
104
MEMORY DEVICE
103
AUXILIARY STORAGE DEVICE
102
DRIVE DEVICE
100
RECORDING MEDIUM
101
B

FIG.3

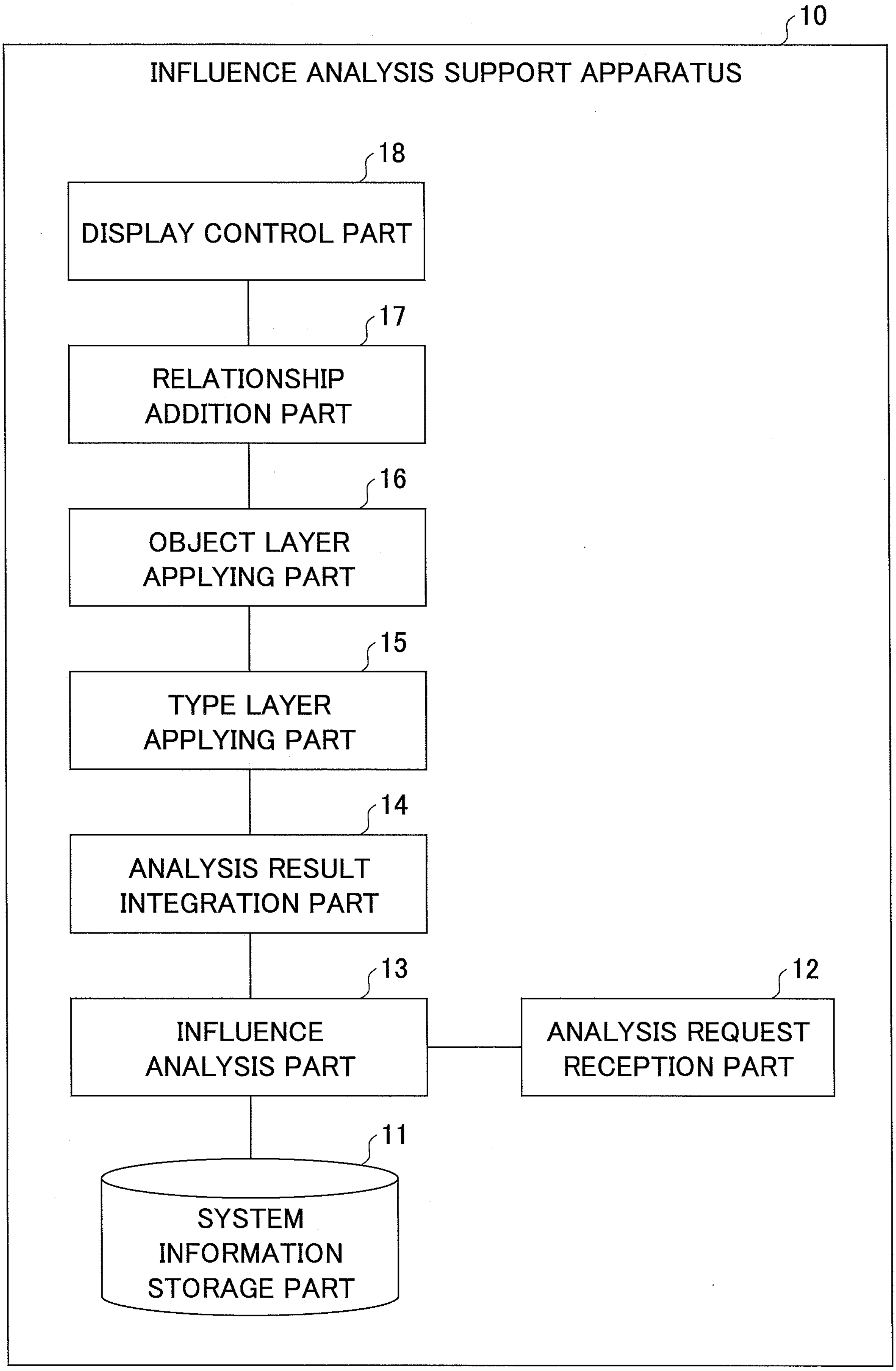
10
INFLUENCE ANALYSIS SUPPORT APPARATUS
18
DISPLAY CONTROL PART
17
RELATIONSHIP ADDITION PART
16
OBJECT LAYER APPLYING PART
15
TYPE LAYER APPLYING PART
14
ANALYSIS RESULT INTEGRATION PART
13
INFLUENCE ANALYSIS PART
12
ANALYSIS REQUEST RECEPTION PART
11
SYSTEM INFORMATION STORAGE PART

FIG.4

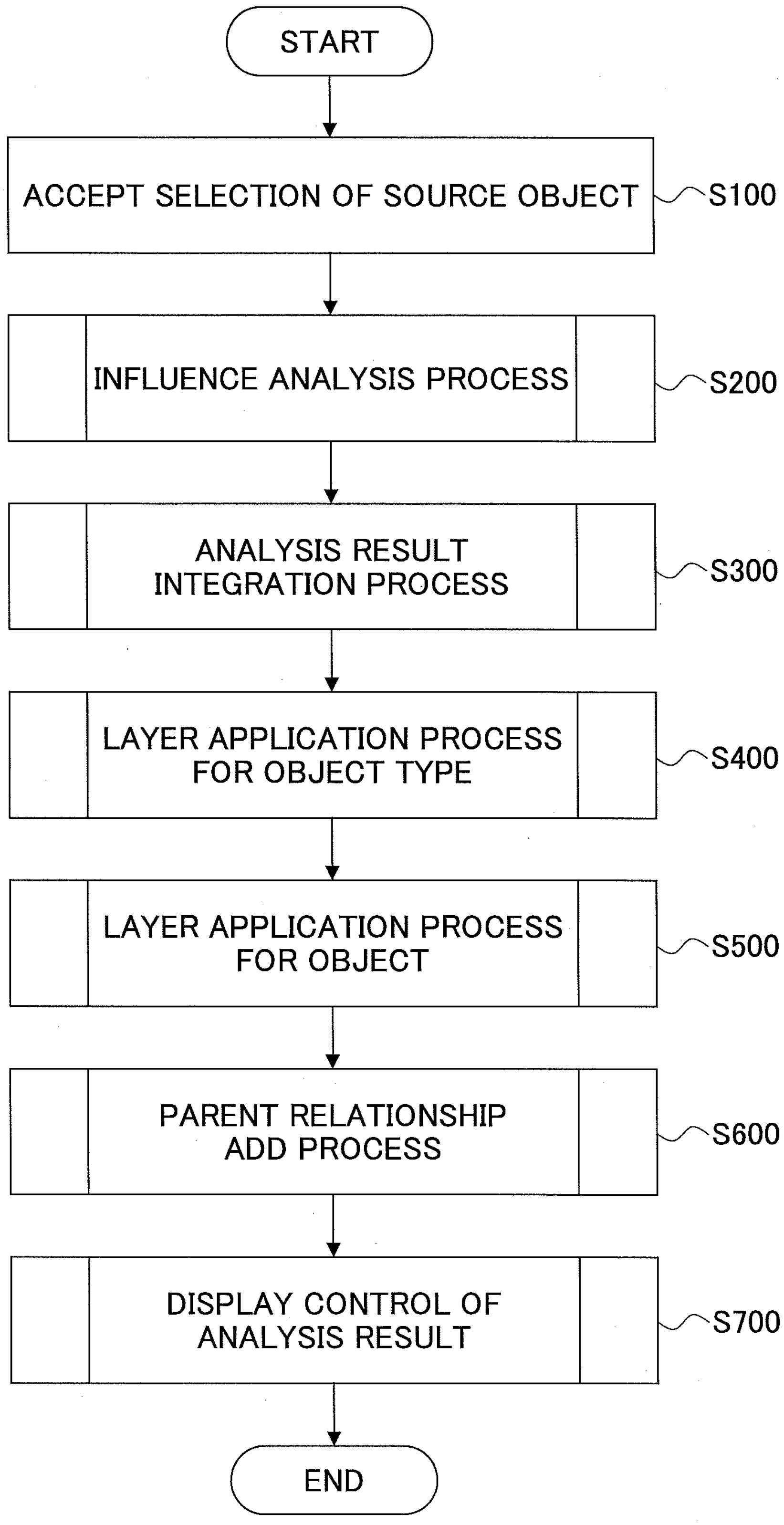
START
ACCEPT SELECTION OF SOURCE OBJECT
S100
INFLUENCE ANALYSIS PROCESS
S200
ANALYSIS RESULT INTEGRATION PROCESS
S300
LAYER APPLICATION PROCESS FOR OBJECT TYPE
S400
LAYER APPLICATION PROCESS FOR OBJECT
S500
PARENT RELATIONSHIP ADD PROCESS
S600
DISPLAY CONTROL OF ANALYSIS RESULT
S700
END

FIG.5

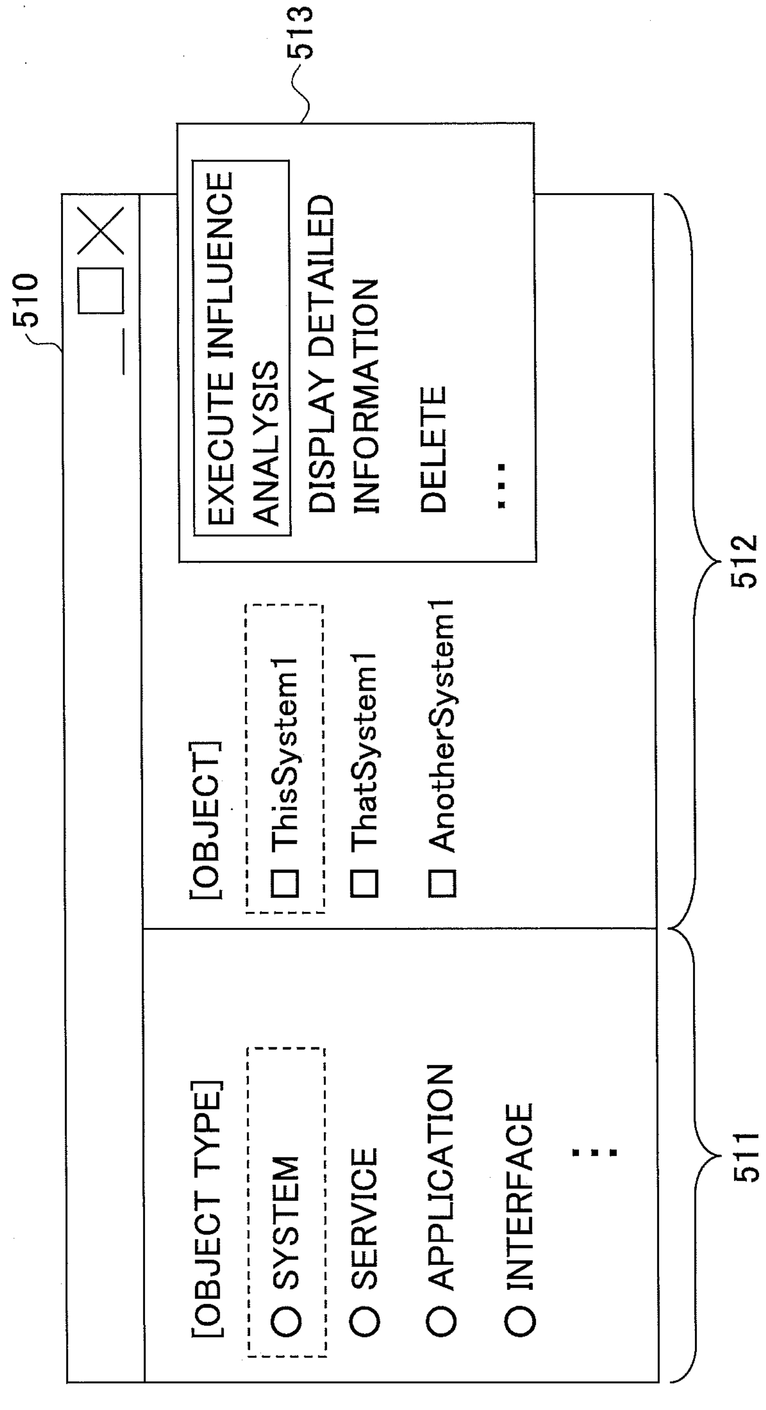
510
511
512
513
[OBJECT TYPE]
SYSTEM
SERVICE
APPLICATION
INTERFACE
...
[OBJECT]
ThisSystem1
ThatSystem1
AnotherSystem1
EXECUTE INFLUENCE ANALYSIS
DISPLAY DETAILED INFORMATION
DELETE
...

FIG.6

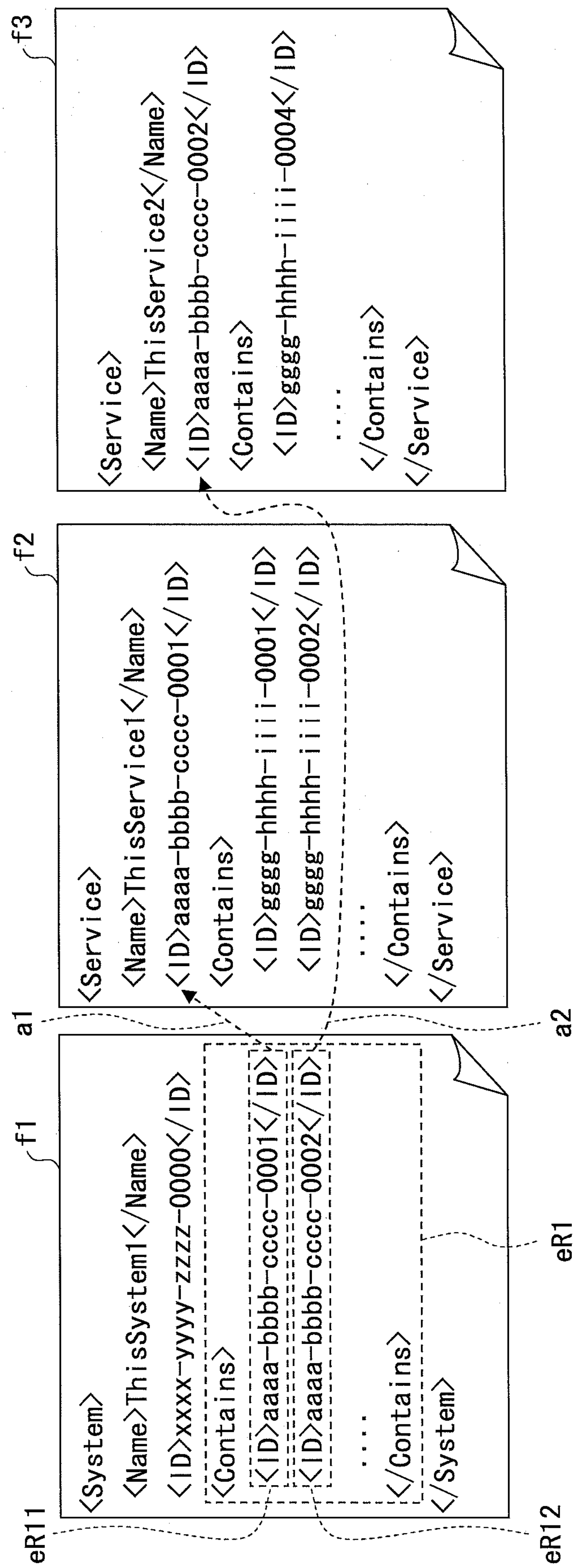
f1
<System>
<Name>ThisSystem1</Name>
<ID>xxxx-yyyy-zzzz-0000</ID>
<Contains>
<ID>aaaa-bbbb-cccc-0001</ID>
<ID>aaaa-bbbb-cccc-0002</ID>
....
</Contains>
</System>
eR11
eR12
eR1
a1
a2
f2
<Service>
<Name>ThisService1</Name>
<ID>aaaa-bbbb-cccc-0001</ID>
<Contains>
<ID>gggg-hhhh-iiii-0001</ID>
<ID>gggg-hhhh-iiii-0002</ID>
....
</Contains>
</Service>
f3
<Service>
<Name>ThisService2</Name>
<ID>aaaa-bbbb-cccc-0002</ID>
<Contains>
<ID>gggg-hhhh-iiii-0004</ID>
....
</Contains>
</Service>

FIG.7

t1

| RELATED SOURCE OBJECT TYPE | RELATED SOURCE OBJECT NAME | RELATIONSHIP TYPE | RELATED DESTINATION OBJECT TYPE | RELATED DESTINATION OBJECT NAME |
|---|---|---|---|---|
| SYSTEM | ThisSystem1 | Contains | SERVICE | ThisService1 |
| SERVICE | ThisService1 | HasChild | INTERFACE | ThisIF1 |
| SERVICE | ThisService1 | HasChild | INTERFACE | ThisIF2 |
| SERVICE | ThisService1 | HasChild | INTERFACE | ThisIF3 |
| SERVICE | ThatService1 | Uses | INTERFACE | ThisIF3 |
| SERVICE | ThatService1 | HasChild | INTERFACE | ThatIF1 |
| SYSTEM | ThatSystem1 | Contains | SERVICE | ThatService1 |
| SYSTEM | ThisSystem1 | Contains | SERVICE | ThisService2 |
| SERVICE | ThisService2 | HasChild | INTERFACE | ThisIF4 |
| SYSTEM | ThisSystem1 | Contains | APPLICATION | ThisApp1 |
| APPLICATION | ThisApp1 | HasChild | INTERFACE | ThisIF5 |
| SERVICE | AnotherService1 | Uses | INTERFACE | ThisIF4 |
| SERVICE | AnotherService1 | HasChild | INTERFACE | AnotherIF1 |
| SYSTEM | AnotherSystem1 | Contains | SERVICE | AnotherService1 |
| SYSTEM | AnotherSystem1 | Contains | APPLICATION | AnotherApp1 |
| APPLICATION | AnotherApp1 | HasChild | INTERFACE | AnotherIF2 |
| APPLICATION | AnotherApp1 | Uses | INTERFACE | ThisIF6 |
| SYSTEM | ThisSystem1 | HasChild | INTERFACE | ThisIF6 |

FIG.8

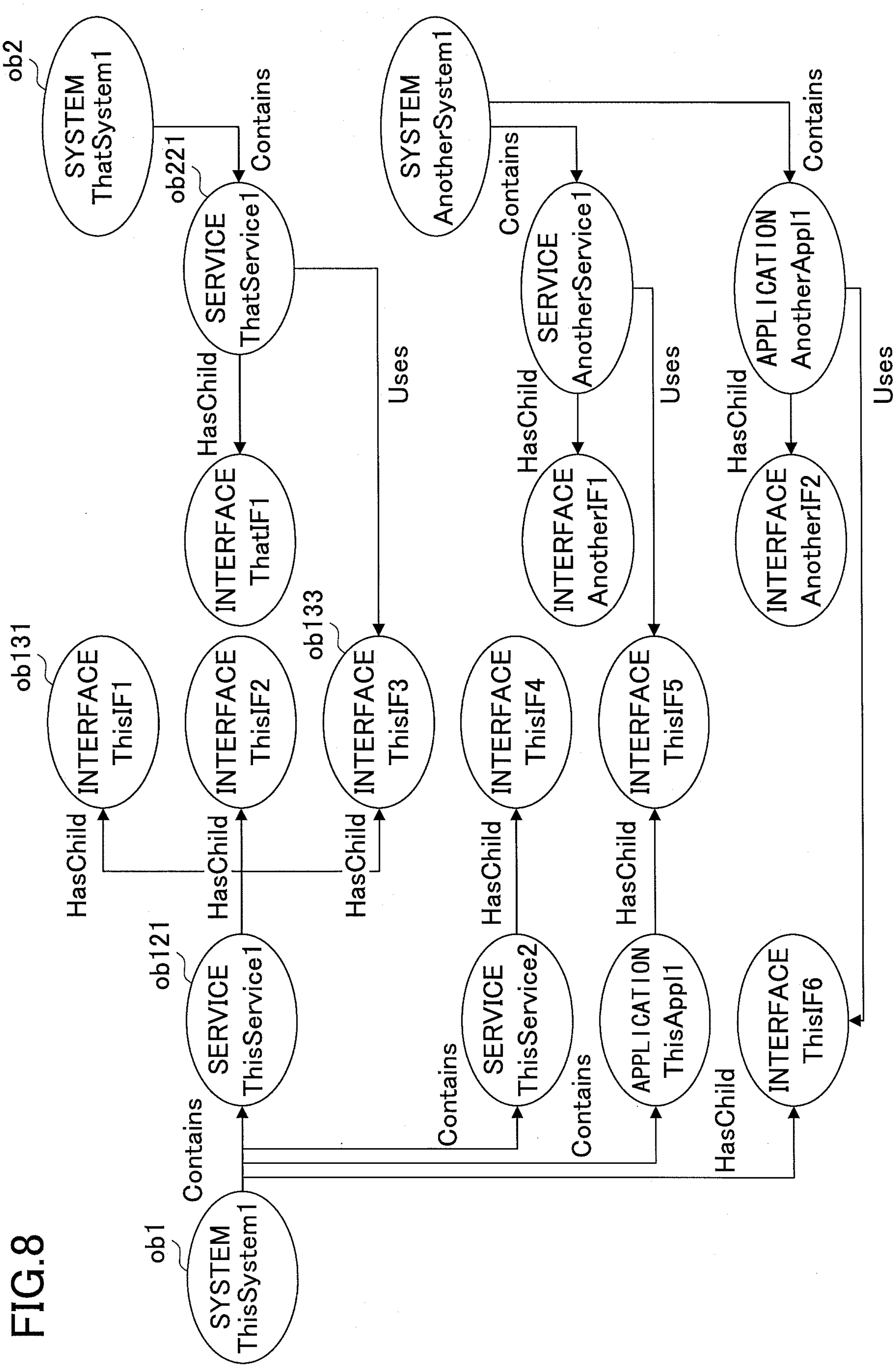
ob1
SYSTEM ThisSystem1
ob121
SERVICE ThisService1
SERVICE ThisService2
APPLICATION ThisAppl1
INTERFACE ThisIF6
ob131
INTERFACE ThisIF1
INTERFACE ThisIF2
ob133
INTERFACE ThisIF3
INTERFACE ThisIF4
INTERFACE ThisIF5
ob2
SYSTEM ThatSystem1
ob221
SERVICE ThatService1
INTERFACE ThatIF1
SYSTEM AnotherSystem1
SERVICE AnotherService1
INTERFACE AnotherIF1
APPLICATION AnotherAppl1
INTERFACE AnotherIF2
Contains
HasChild
Uses

# FIG.9

t2

| RELATED SOURCE OBJECT TYPE | RELATIONSHIP TYPE | PARENT -CHILD | RELATED DESTINATION OBJECT TYPE | TOTAL NUMBER |
|---|---|---|---|---|
| SYSTEM | Contains | Y | SERVICE | 4 |
| SYSTEM | Contains | Y | APPLICATION | 2 |
| SYSTEM | HasChild | Y | INTERFACE | 1 |
| SERVICE | HasChild | Y | INTERFACE | 6 |
| SERVICE | Uses | N | INTERFACE | 2 |
| APPLICATION | HasChild | Y | INTERFACE | 2 |
| APPLICATION | Uses | N | INTERFACE | 1 |

FIG.10

t3

| OBJECT TYPE | LAYER |
|---|---|
| SYSTEM | 0 |
| SERVICE | 1 |
| APPLICATION | 1 |
| INTERFACE | 2 |

# FIG.11

t4

| RELATED SOURCE OBJECT TYPE | RELATED SOURCE OBJECT NAME | RELATED SOURCE LAYER | RELATIONSHIP TYPE | PARENT -CHILD | RELATED DESTINATION OBJECT TYPE | RELATED DESTINATION OBJECT NAME | RELATED DESTINA-TION LAYER |
|---|---|---|---|---|---|---|---|
| SYSTEM | ThisSystem1 | 0 | Contains | Y | SERVICE | ThisService1 | 1 |
| SERVICE | ThisService1 | 1 | HasChild | Y | INTERFACE | ThisIF1 | 2 |
| SERVICE | ThisService1 | 1 | HasChild | Y | INTERFACE | ThisIF2 | 2 |
| SERVICE | ThisService1 | 1 | HasChild | Y | INTERFACE | ThisIF3 | 2 |
| SERVICE | ThatService1 | 1 | Uses | N | INTERFACE | ThisIF3 | 2 |
| SERVICE | ThatService1 | 1 | HasChild | Y | INTERFACE | ThatIF1 | 2 |
| SYSTEM | ThatSystem1 | 0 | Contains | Y | SERVICE | ThatService1 | 1 |
| SYSTEM | ThisSystem1 | 0 | Contains | Y | SERVICE | ThisService2 | 1 |
| SERVICE | ThisService2 | 1 | HasChild | Y | INTERFACE | ThisIF4 | 2 |
| SYSTEM | ThisSystem1 | 0 | Contains | Y | APPLICATION | ThisApp1 | 1 |
| APPLICATION | ThisApp1 | 1 | HasChild | Y | INTERFACE | ThisIF5 | 2 |
| SERVICE | AnotherService1 | 1 | Uses | N | INTERFACE | ThisIF4 | 2 |
| SERVICE | AnotherService1 | 1 | HasChild | Y | INTERFACE | AnotherIF1 | 2 |
| SYSTEM | AnotherSystem1 | 0 | Contains | Y | SERVICE | AnotherService1 | 1 |
| SYSTEM | AnotherSystem1 | 0 | Contains | Y | APPLICATION | AnotherApp1 | 1 |
| APPLICATION | AnotherApp1 | 1 | HasChild | Y | INTERFACE | AnotherIF2 | 2 |
| APPLICATION | AnotherApp1 | 1 | Uses | N | INTERFACE | ThisIF6 | 2 |
| SYSTEM | ThisSystem1 | 0 | HasChild | Y | INTERFACE | ThisIF6 | 2 |
| SYSTEM | ThatSystem1 | 0 | Uses | N | SYSTEM | ThisSystem1 | 0 |
| SYSTEM | AnotherSystem1 | 0 | Uses | N | SYSTEM | ThisSystem1 | 0 |
| SERVICE | ThatService1 | 1 | Uses | N | SERVICE | ThisService1 | 1 |
| SERVICE | AnotherService1 | 1 | Uses | N | SERVICE | ThisApp1 | 1 |
| APPLICATION | AnotherApp1 | 1 | Uses | N | SYSTEM | ThisSystem1 | 0 |

A

FIG.12

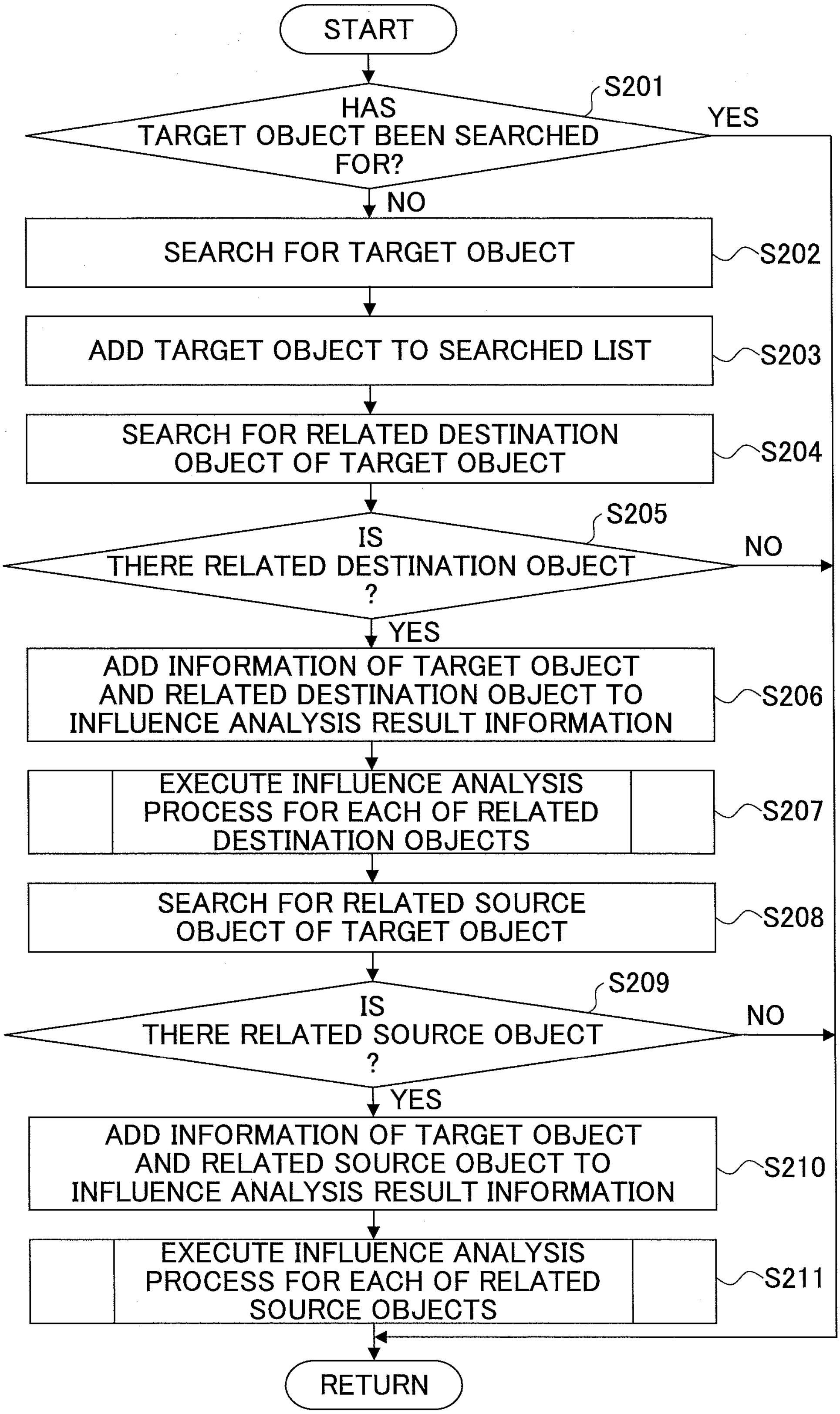
START
S201
HAS TARGET OBJECT BEEN SEARCHED FOR?
YES
NO
SEARCH FOR TARGET OBJECT
S202
ADD TARGET OBJECT TO SEARCHED LIST
S203
SEARCH FOR RELATED DESTINATION OBJECT OF TARGET OBJECT
S204
S205
IS THERE RELATED DESTINATION OBJECT ?
NO
YES
ADD INFORMATION OF TARGET OBJECT AND RELATED DESTINATION OBJECT TO INFLUENCE ANALYSIS RESULT INFORMATION
S206
EXECUTE INFLUENCE ANALYSIS PROCESS FOR EACH OF RELATED DESTINATION OBJECTS
S207
SEARCH FOR RELATED SOURCE OBJECT OF TARGET OBJECT
S208
S209
IS THERE RELATED SOURCE OBJECT ?
NO
YES
ADD INFORMATION OF TARGET OBJECT AND RELATED SOURCE OBJECT TO INFLUENCE ANALYSIS RESULT INFORMATION
S210
EXECUTE INFLUENCE ANALYSIS PROCESS FOR EACH OF RELATED SOURCE OBJECTS
S211
RETURN

FIG.13

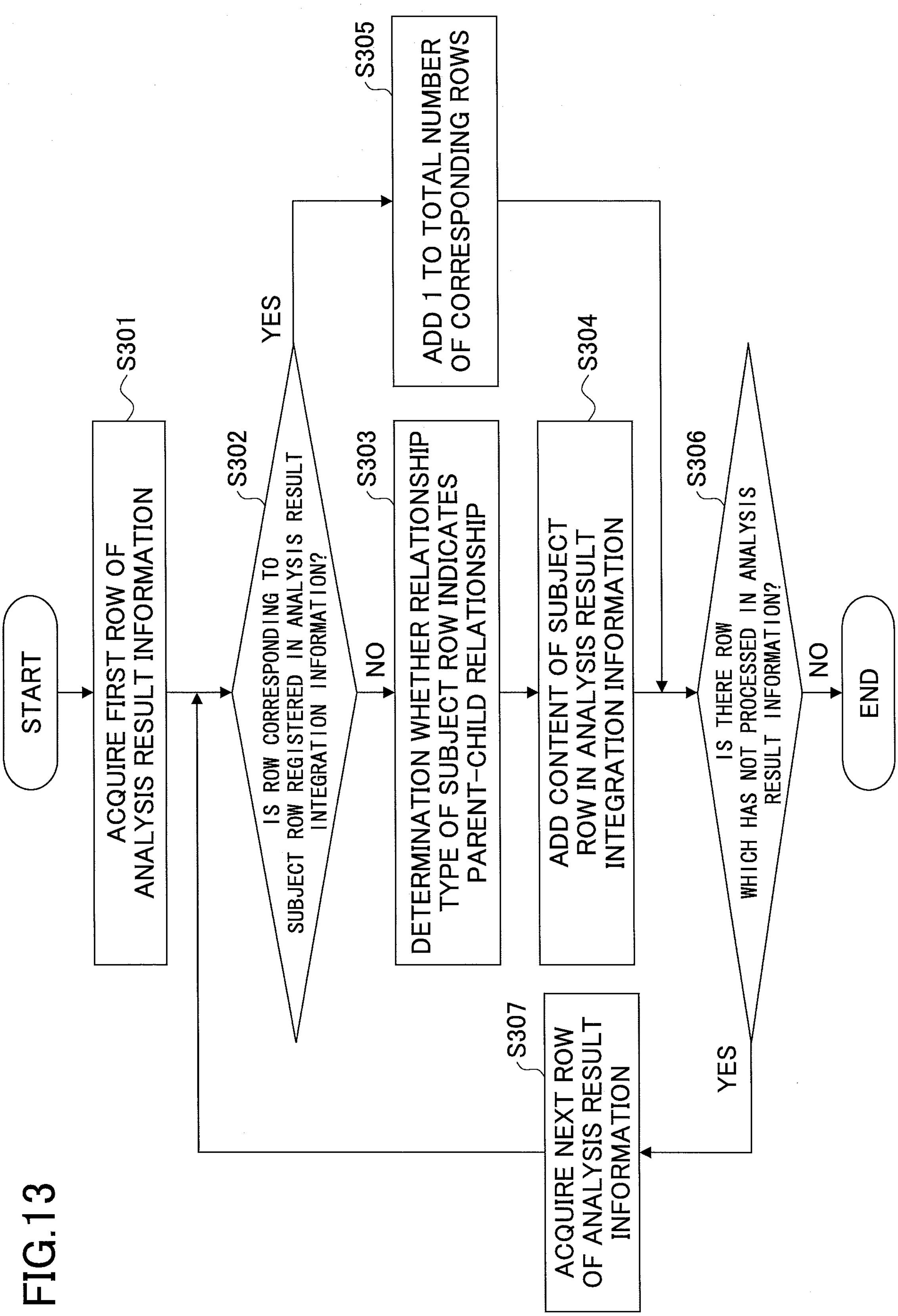
START
ACQUIRE FIRST ROW OF ANALYSIS RESULT INFORMATION
S301
IS ROW CORRESPONDING TO SUBJECT ROW REGISTERED IN ANALYSIS RESULT INTEGRATION INFORMATION?
S302
YES
NO
ADD 1 TO TOTAL NUMBER OF CORRESPONDING ROWS
S305
DETERMINATION WHETHER RELATIONSHIP TYPE OF SUBJECT ROW INDICATES PARENT-CHILD RELATIONSHIP
S303
ADD CONTENT OF SUBJECT ROW IN ANALYSIS RESULT INTEGRATION INFORMATION
S304
IS THERE ROW WHICH HAS NOT PROCESSED IN ANALYSIS RESULT INFORMATION?
S306
YES
NO
ACQUIRE NEXT ROW OF ANALYSIS RESULT INFORMATION
S307
END

FIG.14

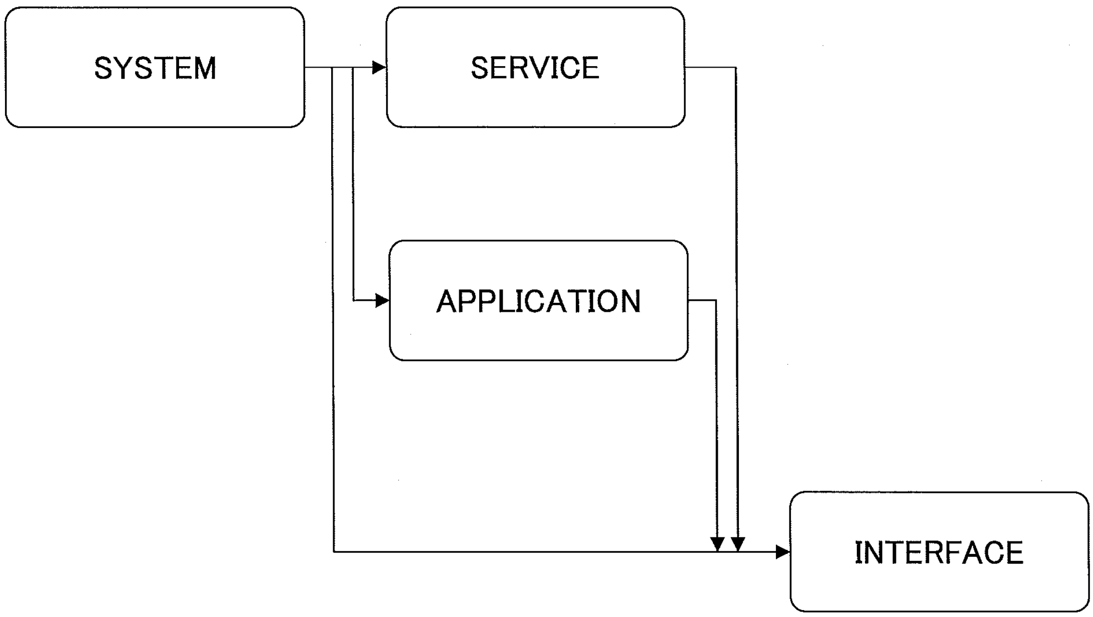

FIG.15

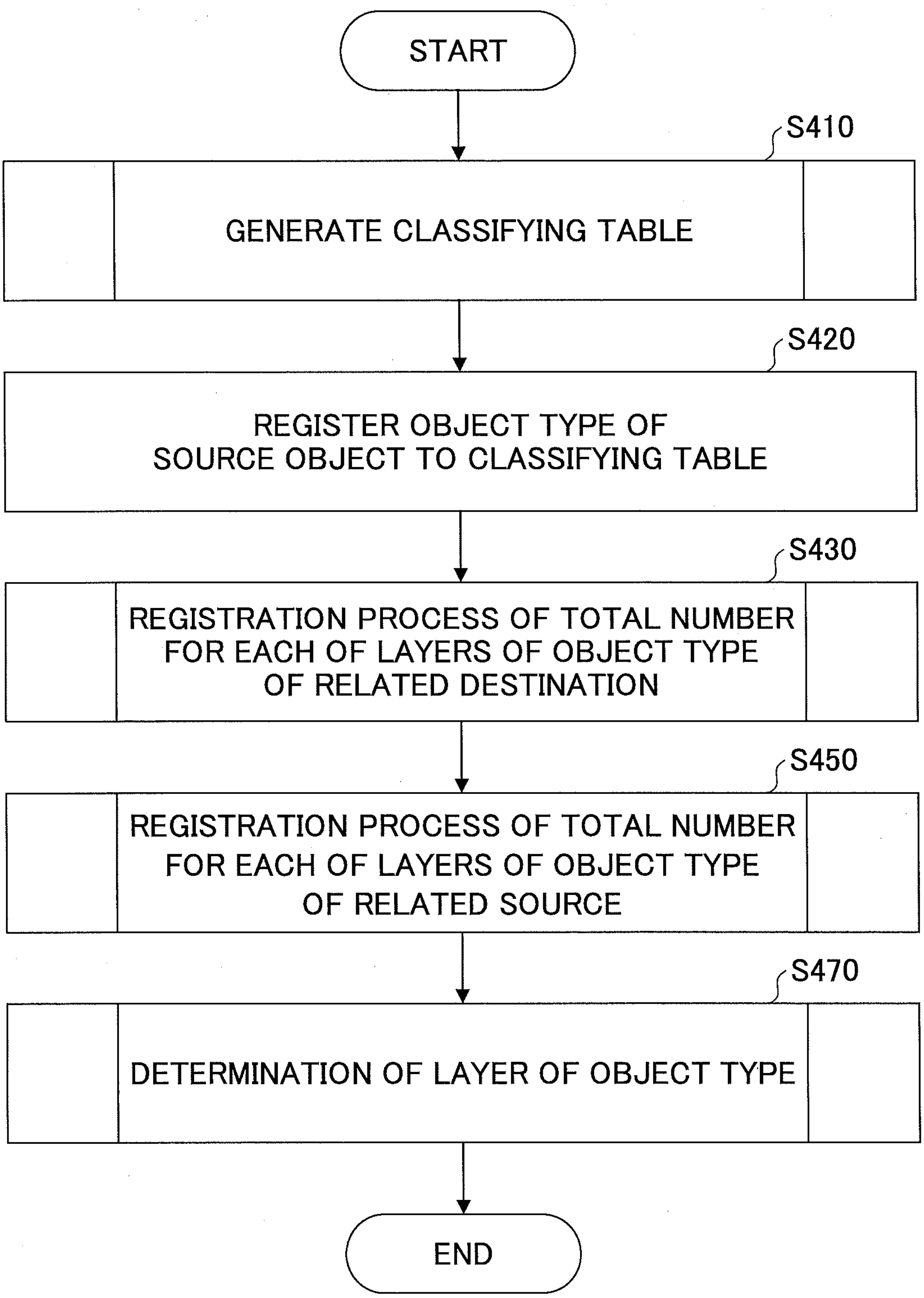
START
S410
GENERATE CLASSIFYING TABLE
S420
REGISTER OBJECT TYPE OF
SOURCE OBJECT TO CLASSIFYING TABLE
S430
REGISTRATION PROCESS OF TOTAL NUMBER
FOR EACH OF LAYERS OF OBJECT TYPE
OF RELATED DESTINATION
S450
REGISTRATION PROCESS OF TOTAL NUMBER
FOR EACH OF LAYERS OF OBJECT TYPE
OF RELATED SOURCE
S470
DETERMINATION OF LAYER OF OBJECT TYPE
END

# FIG.16

t5

| OBJECT TYPE | LAYER | | | | | | |
|---|---|---|---|---|---|---|---|
| | −3 | −2 | −1 | 0 | 1 | 2 | 3 |
| SYSTEM | | | | x | | | |
| SERVICE | | | | | 4 | | |
| APPLICATION | | | | | 2 | | |
| INTERFACE | | | | | 1 | 8 | |

FIG.17

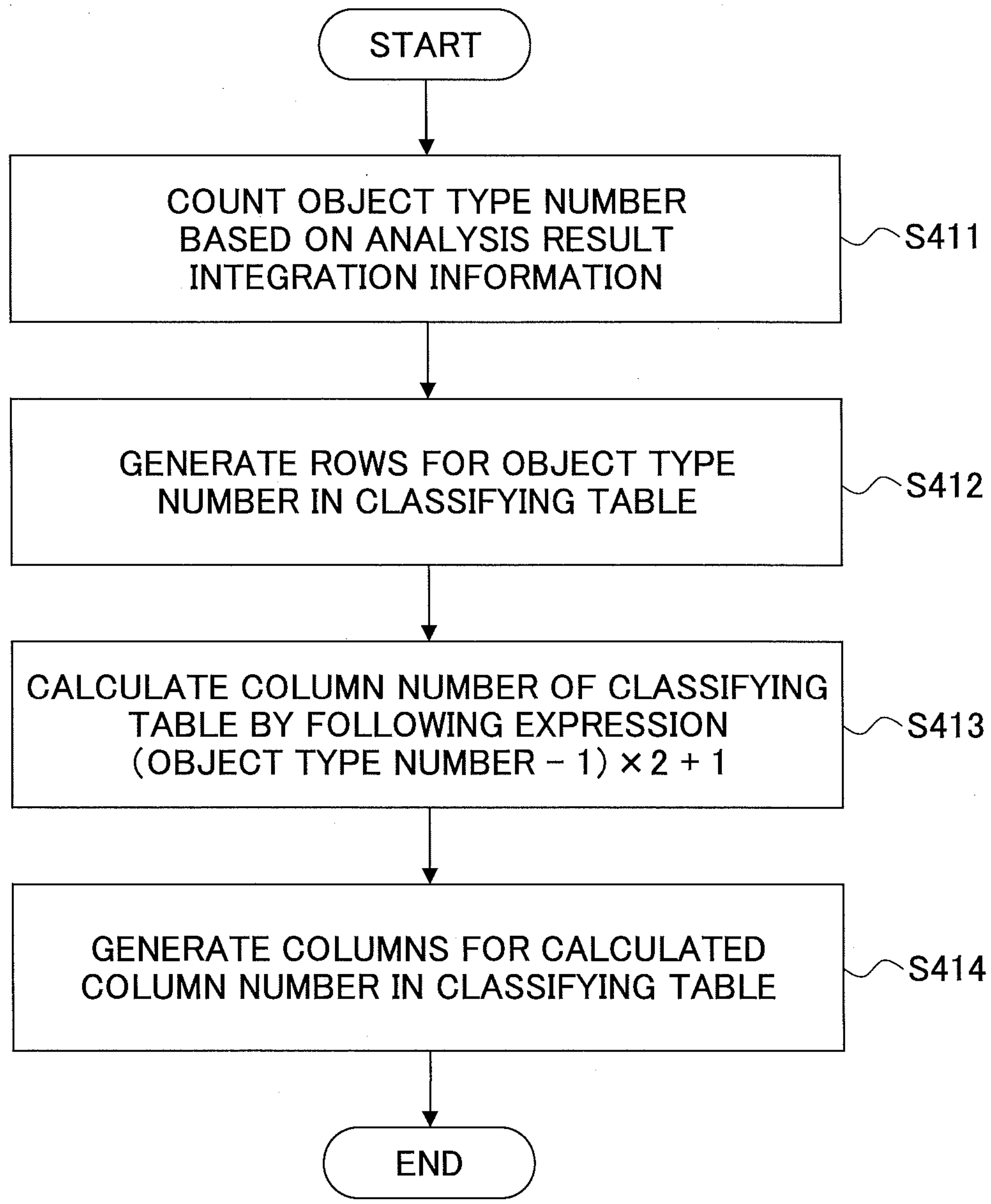
START
COUNT OBJECT TYPE NUMBER BASED ON ANALYSIS RESULT INTEGRATION INFORMATION
S411
GENERATE ROWS FOR OBJECT TYPE NUMBER IN CLASSIFYING TABLE
S412
CALCULATE COLUMN NUMBER OF CLASSIFYING TABLE BY FOLLOWING EXPRESSION (OBJECT TYPE NUMBER − 1) × 2 + 1
S413
GENERATE COLUMNS FOR CALCULATED COLUMN NUMBER IN CLASSIFYING TABLE
S414
END

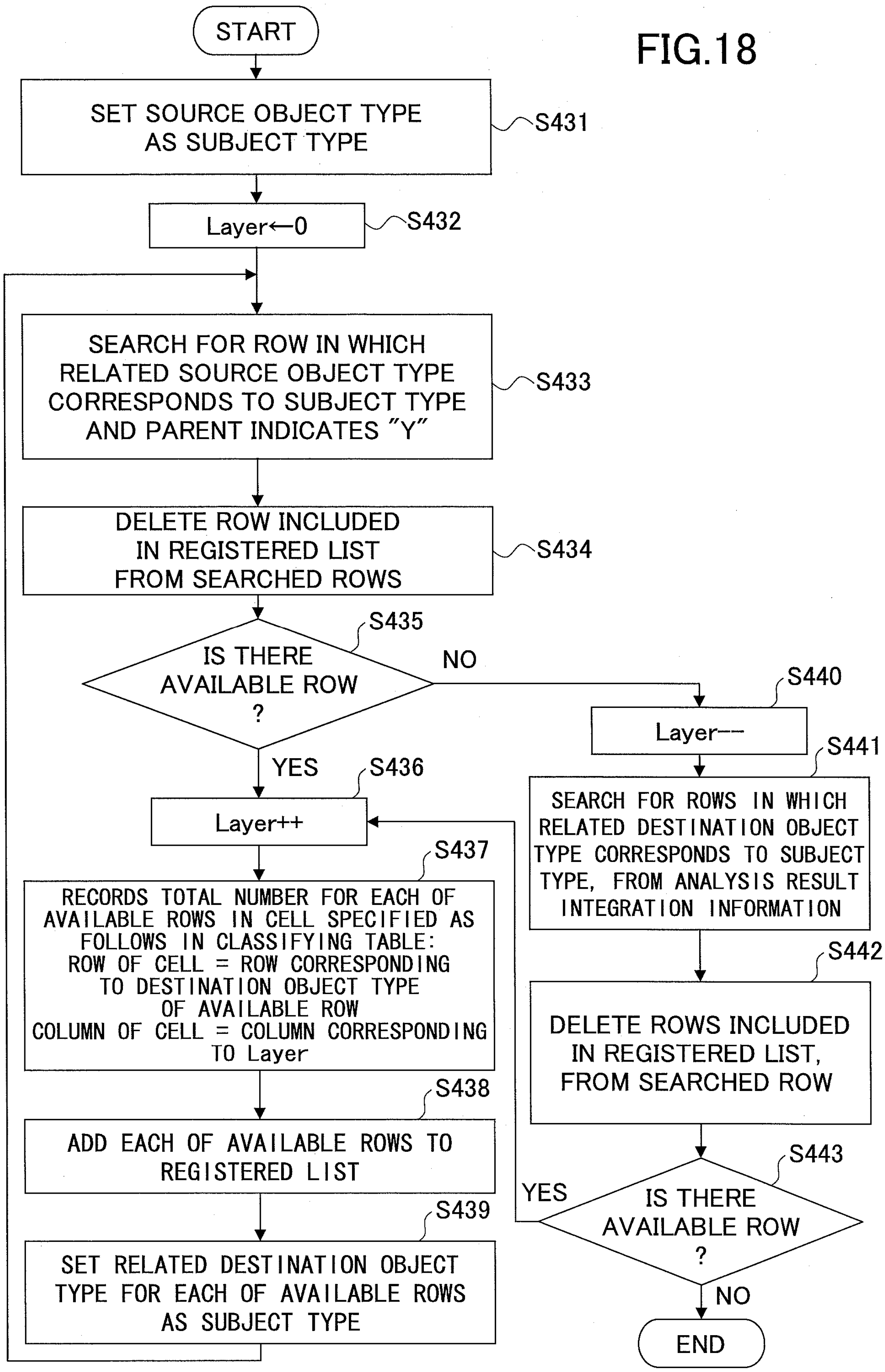
START
SET SOURCE OBJECT TYPE AS SUBJECT TYPE
S431
Layer←0
S432
SEARCH FOR ROW IN WHICH RELATED SOURCE OBJECT TYPE CORRESPONDS TO SUBJECT TYPE AND PARENT INDICATES "Y"
S433
DELETE ROW INCLUDED IN REGISTERED LIST FROM SEARCHED ROWS
S434
IS THERE AVAILABLE ROW ?
S435
NO
YES
Layer++
S436
RECORDS TOTAL NUMBER FOR EACH OF AVAILABLE ROWS IN CELL SPECIFIED AS FOLLOWS IN CLASSIFYING TABLE: ROW OF CELL = ROW CORRESPONDING TO DESTINATION OBJECT TYPE OF AVAILABLE ROW COLUMN OF CELL = COLUMN CORRESPONDING TO Layer
S437
ADD EACH OF AVAILABLE ROWS TO REGISTERED LIST
S438
SET RELATED DESTINATION OBJECT TYPE FOR EACH OF AVAILABLE ROWS AS SUBJECT TYPE
S439
Layer−−
S440
SEARCH FOR ROWS IN WHICH RELATED DESTINATION OBJECT TYPE CORRESPONDS TO SUBJECT TYPE, FROM ANALYSIS RESULT INTEGRATION INFORMATION
S441
DELETE ROWS INCLUDED IN REGISTERED LIST, FROM SEARCHED ROW
S442
IS THERE AVAILABLE ROW ?
S443
YES
NO
END

FIG.18

FIG.19

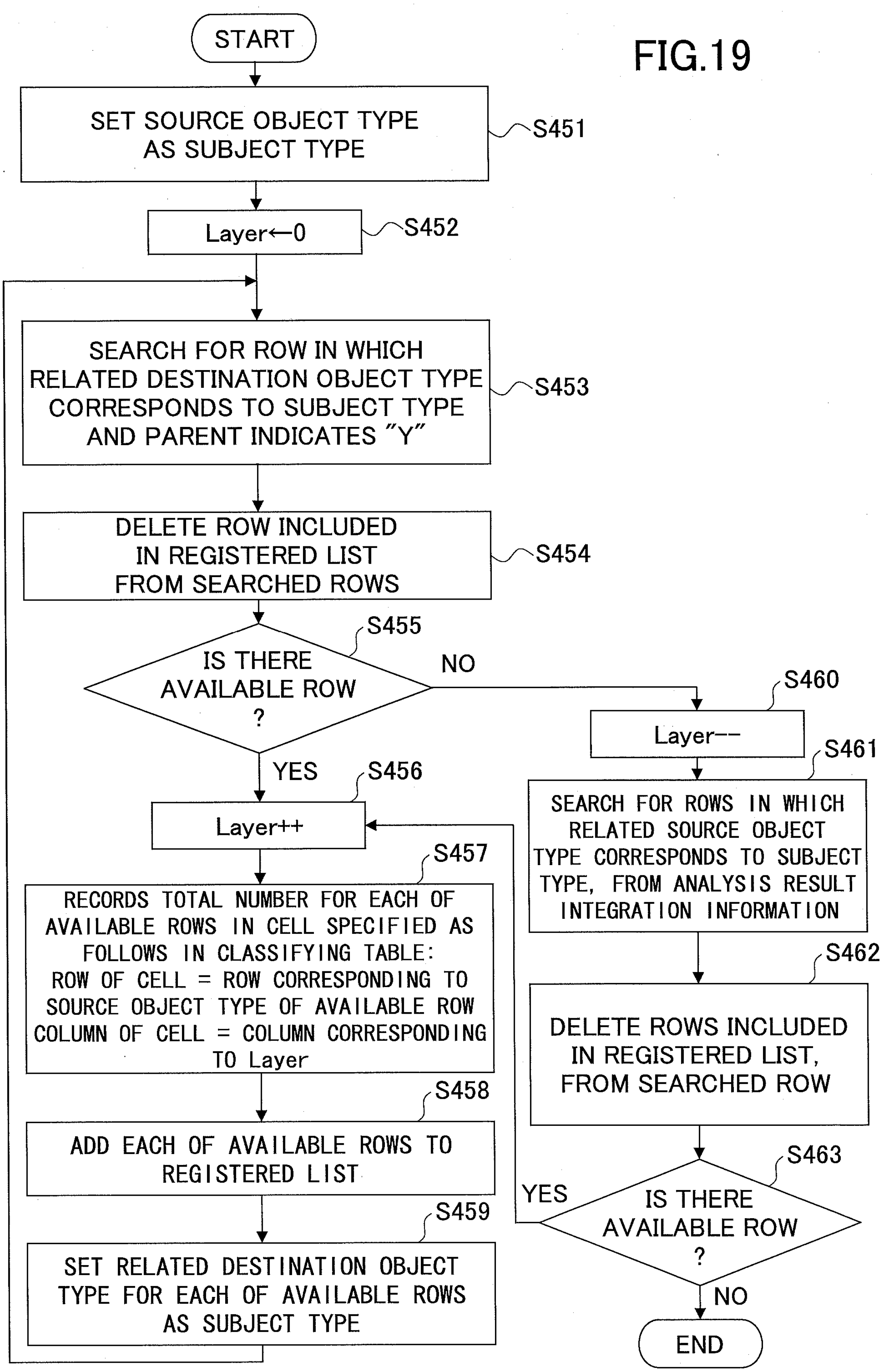
START
SET SOURCE OBJECT TYPE AS SUBJECT TYPE
S451
Layer←0
S452
SEARCH FOR ROW IN WHICH RELATED DESTINATION OBJECT TYPE CORRESPONDS TO SUBJECT TYPE AND PARENT INDICATES "Y"
S453
DELETE ROW INCLUDED IN REGISTERED LIST FROM SEARCHED ROWS
S454
S455
IS THERE AVAILABLE ROW ?
NO
YES
S456
Layer++
S457
RECORDS TOTAL NUMBER FOR EACH OF AVAILABLE ROWS IN CELL SPECIFIED AS FOLLOWS IN CLASSIFYING TABLE:
ROW OF CELL = ROW CORRESPONDING TO SOURCE OBJECT TYPE OF AVAILABLE ROW
COLUMN OF CELL = COLUMN CORRESPONDING TO Layer
S458
ADD EACH OF AVAILABLE ROWS TO REGISTERED LIST
S459
SET RELATED DESTINATION OBJECT TYPE FOR EACH OF AVAILABLE ROWS AS SUBJECT TYPE
S460
Layer--
S461
SEARCH FOR ROWS IN WHICH RELATED SOURCE OBJECT TYPE CORRESPONDS TO SUBJECT TYPE, FROM ANALYSIS RESULT INTEGRATION INFORMATION
S462
DELETE ROWS INCLUDED IN REGISTERED LIST, FROM SEARCHED ROW
S463
YES
IS THERE AVAILABLE ROW ?
NO
END

FIG.20

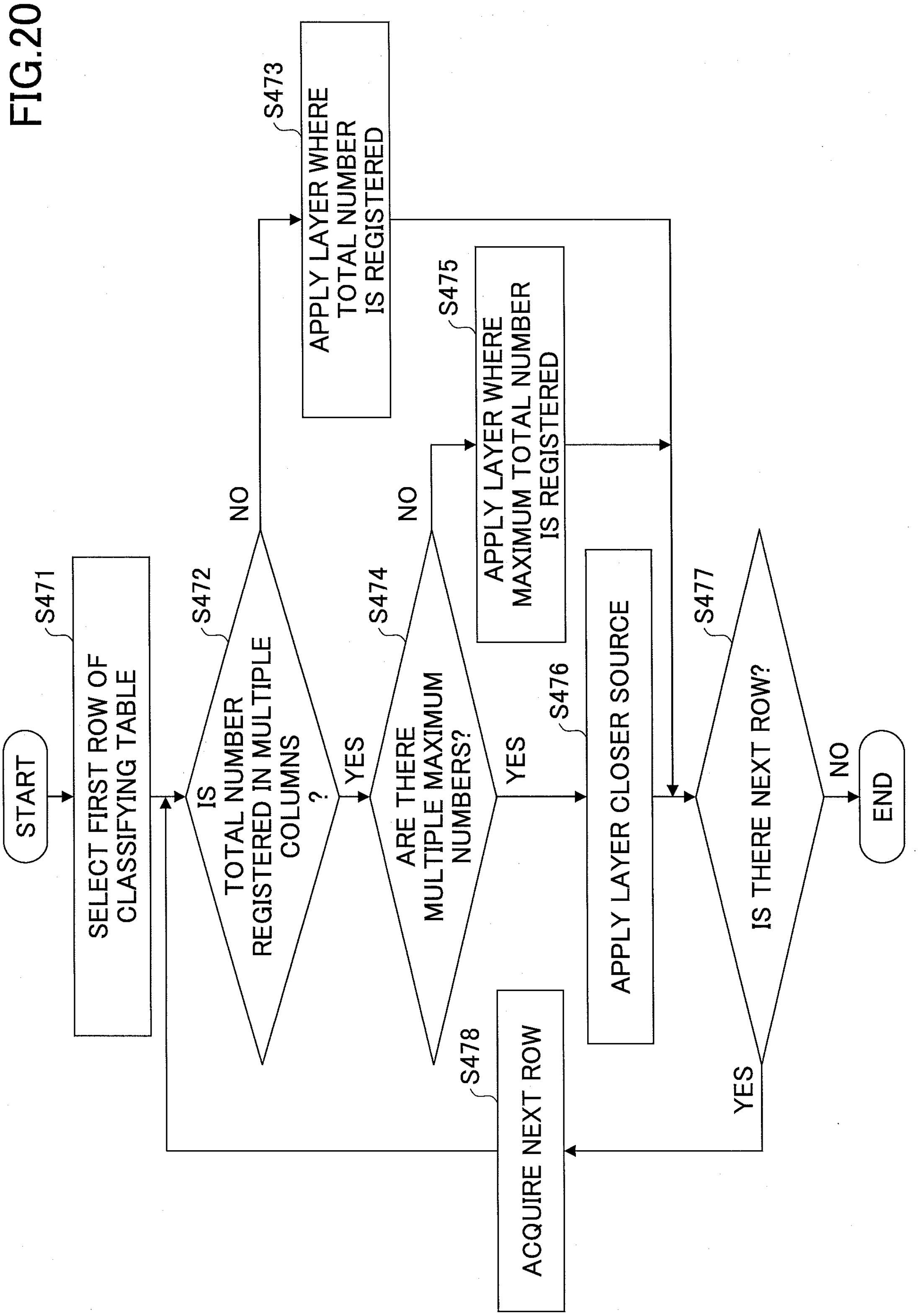
START
SELECT FIRST ROW OF CLASSIFYING TABLE
S471
IS TOTAL NUMBER REGISTERED IN MULTIPLE COLUMNS ?
S472
NO
APPLY LAYER WHERE TOTAL NUMBER IS REGISTERED
S473
YES
ARE THERE MULTIPLE MAXIMUM NUMBERS?
S474
NO
APPLY LAYER WHERE MAXIMUM TOTAL NUMBER IS REGISTERED
S475
YES
APPLY LAYER CLOSER SOURCE
S476
IS THERE NEXT ROW?
S477
NO
END
YES
ACQUIRE NEXT ROW
S478

FIG.21

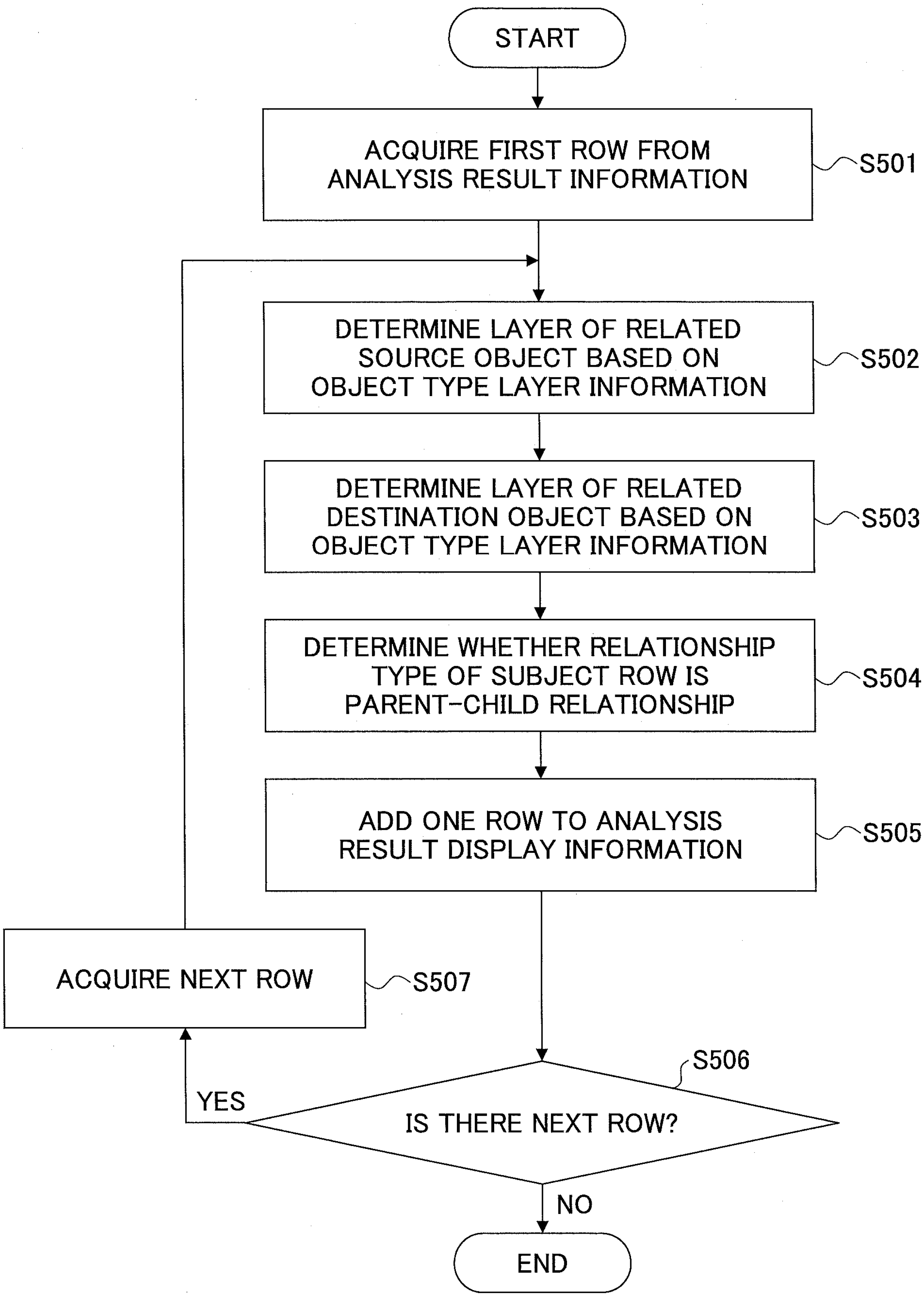
START
ACQUIRE FIRST ROW FROM ANALYSIS RESULT INFORMATION
S501
DETERMINE LAYER OF RELATED SOURCE OBJECT BASED ON OBJECT TYPE LAYER INFORMATION
S502
DETERMINE LAYER OF RELATED DESTINATION OBJECT BASED ON OBJECT TYPE LAYER INFORMATION
S503
DETERMINE WHETHER RELATIONSHIP TYPE OF SUBJECT ROW IS PARENT-CHILD RELATIONSHIP
S504
ADD ONE ROW TO ANALYSIS RESULT DISPLAY INFORMATION
S505
ACQUIRE NEXT ROW
S507
S506
YES
IS THERE NEXT ROW?
NO
END

FIG.22

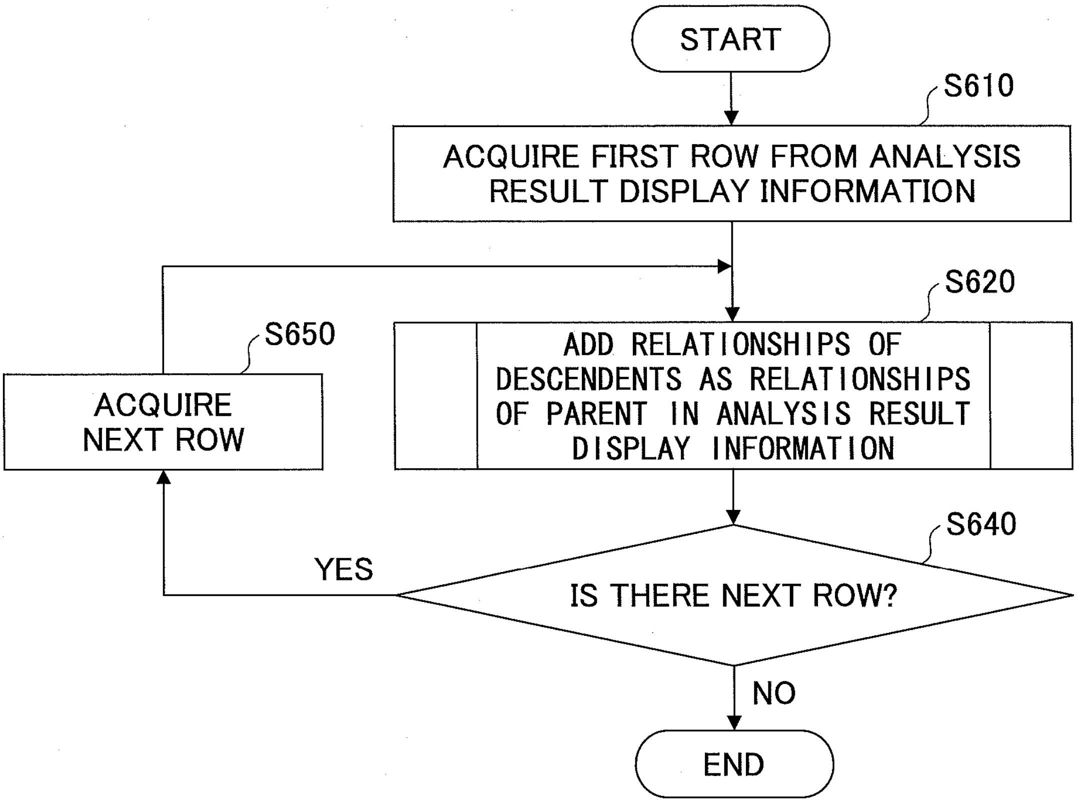
START
S610
ACQUIRE FIRST ROW FROM ANALYSIS RESULT DISPLAY INFORMATION
S620
ADD RELATIONSHIPS OF DESCENDENTS AS RELATIONSHIPS OF PARENT IN ANALYSIS RESULT DISPLAY INFORMATION
S650
ACQUIRE NEXT ROW
S640
IS THERE NEXT ROW?
YES
NO
END

FIG.23

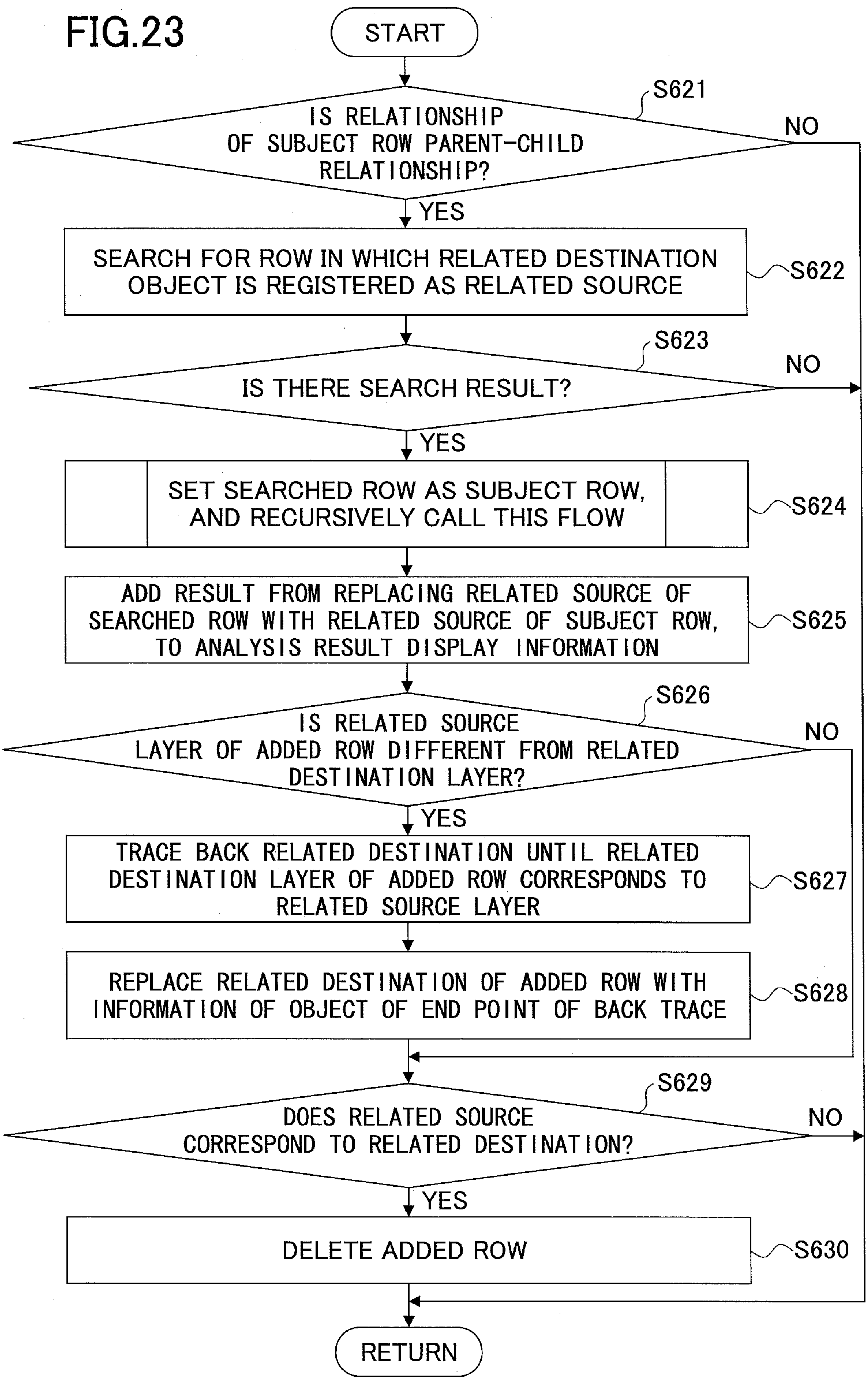
START
IS RELATIONSHIP OF SUBJECT ROW PARENT-CHILD RELATIONSHIP?
S621
NO
YES
SEARCH FOR ROW IN WHICH RELATED DESTINATION OBJECT IS REGISTERED AS RELATED SOURCE
S622
IS THERE SEARCH RESULT?
S623
NO
YES
SET SEARCHED ROW AS SUBJECT ROW, AND RECURSIVELY CALL THIS FLOW
S624
ADD RESULT FROM REPLACING RELATED SOURCE OF SEARCHED ROW WITH RELATED SOURCE OF SUBJECT ROW, TO ANALYSIS RESULT DISPLAY INFORMATION
S625
IS RELATED SOURCE LAYER OF ADDED ROW DIFFERENT FROM RELATED DESTINATION LAYER?
S626
NO
YES
TRACE BACK RELATED DESTINATION UNTIL RELATED DESTINATION LAYER OF ADDED ROW CORRESPONDS TO RELATED SOURCE LAYER
S627
REPLACE RELATED DESTINATION OF ADDED ROW WITH INFORMATION OF OBJECT OF END POINT OF BACK TRACE
S628
DOES RELATED SOURCE CORRESPOND TO RELATED DESTINATION?
S629
NO
YES
DELETE ADDED ROW
S630
RETURN

FIG.24

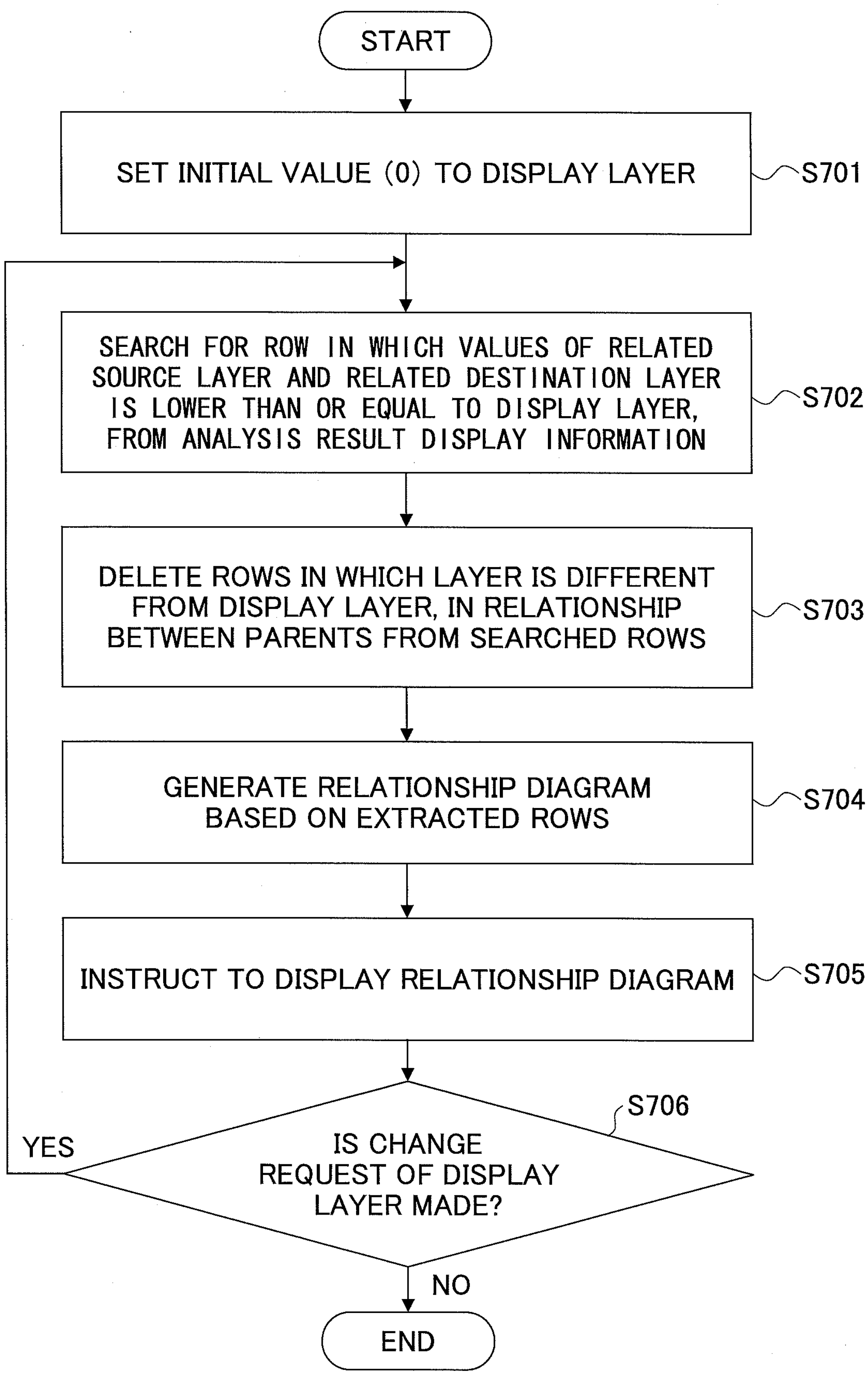
START
SET INITIAL VALUE (0) TO DISPLAY LAYER
S701
SEARCH FOR ROW IN WHICH VALUES OF RELATED SOURCE LAYER AND RELATED DESTINATION LAYER IS LOWER THAN OR EQUAL TO DISPLAY LAYER, FROM ANALYSIS RESULT DISPLAY INFORMATION
S702
DELETE ROWS IN WHICH LAYER IS DIFFERENT FROM DISPLAY LAYER, IN RELATIONSHIP BETWEEN PARENTS FROM SEARCHED ROWS
S703
GENERATE RELATIONSHIP DIAGRAM BASED ON EXTRACTED ROWS
S704
INSTRUCT TO DISPLAY RELATIONSHIP DIAGRAM
S705
IS CHANGE REQUEST OF DISPLAY LAYER MADE?
S706
YES
NO
END

FIG.25

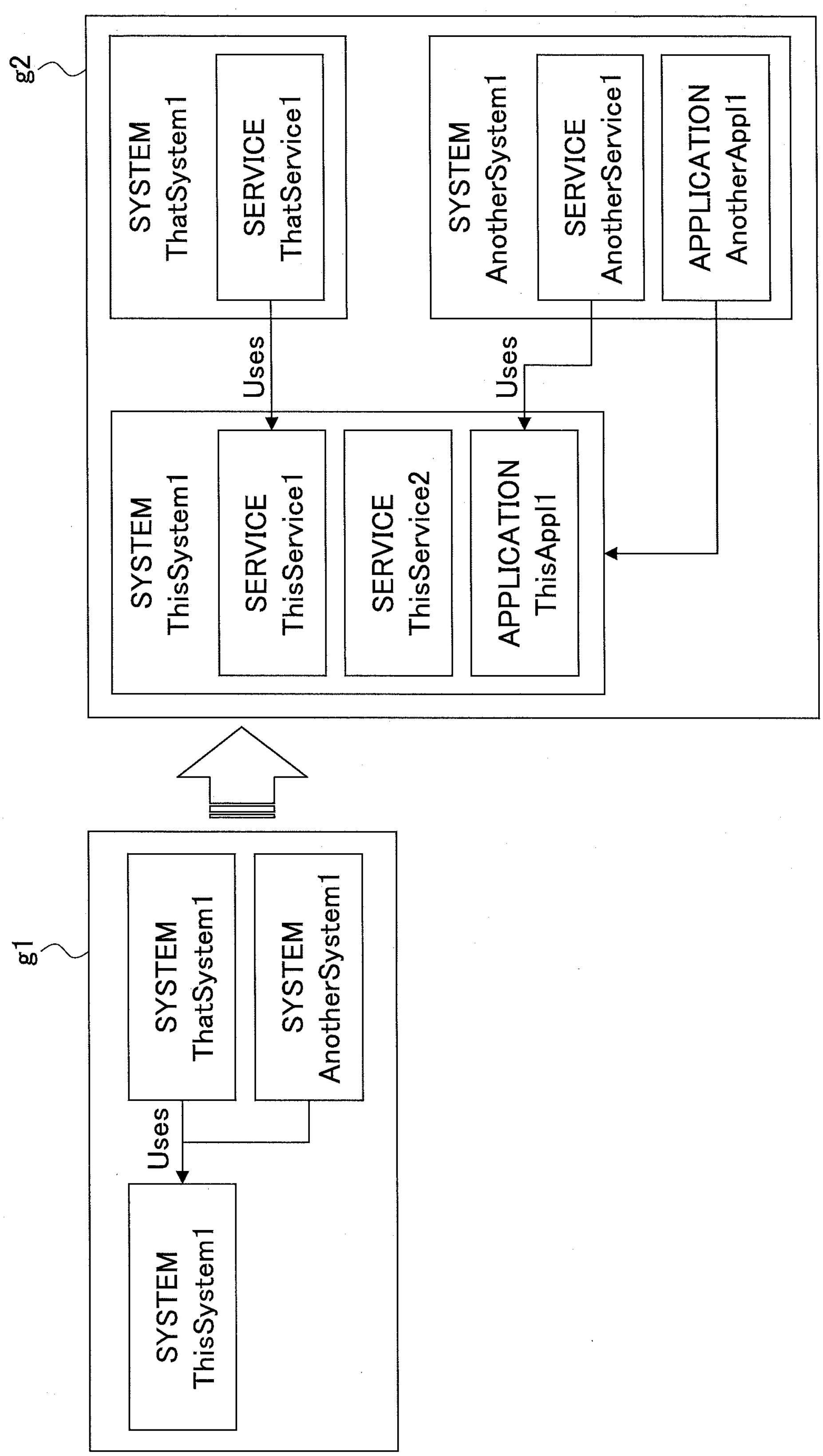
g1
SYSTEM ThatSystem1
SYSTEM AnotherSystem1
Uses
SYSTEM ThisSystem1
g2
SYSTEM ThatSystem1
SERVICE ThatService1
SYSTEM AnotherSystem1
SERVICE AnotherService1
APPLICATION AnotherAppl1
Uses
Uses
SYSTEM ThisSystem1
SERVICE ThisService1
SERVICE ThisService2
APPLICATION ThisAppl1

**INTERNATIONAL SEARCH REPORT**

International application No.
PCT/JP2010/071381

A. CLASSIFICATION OF SUBJECT MATTER
*G06F13/00*(2006.01)i

According to International Patent Classification (IPC) or to both national classification and IPC

B. FIELDS SEARCHED

Minimum documentation searched (classification system followed by classification symbols)
G06F13/00, G06F15/00, G06F9/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2010-205126 A (NEC Corp.),<br>16 September 2010 (16.09.2010),<br>paragraphs [0024], [0041] to [0047];<br>fig. 4 to 9<br>(Family: none) | 1,6,11<br>2-5,7-10,<br>12-15 |
| Y<br>A | JP 2006-178834 A (Mitsubishi Electric Corp., Mitsubishi Electric Information Systems Corp.),<br>06 July 2006 (06.07.2006),<br>entire text; all drawings<br>(Family: none) | 1,6,11<br>2-5,7-10,<br>12-15 |
| Y<br>A | JP 2005-44158 A (Fuji Xerox Co., Ltd.),<br>17 February 2005 (17.02.2005),<br>entire text; all drawings<br>(Family: none) | 1,6,11<br>2-5,7-10,<br>12-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 December, 2010 (28.12.10) | 11 January, 2011 (11.01.11) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/071381

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-312596 A (Hitachi, Ltd.),<br>28 November 1995 (28.11.1995),<br>entire text; all drawings<br>(Family: none) | 1-15 |
| A | JP 2002-132407 A (Sony International (Europe) GmbH),<br>10 May 2002 (10.05.2002),<br>entire text; all drawings<br>& US 2002/0003548 A1 & EP 1172721 A1<br>& KR 10-2002-0006000 A | 1-15 |
| A | JP 9-231152 A (Nippon Telegraph And Telephone Corp.),<br>05 September 1997 (05.09.1997),<br>entire text; all drawings<br>(Family: none) | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000322167 A